# FASCICULE DE BREVET EUROPEEN

(11) **EP 2 751 959 B1**
(45) Date de publication et mention de la délivrance du brevet: **28.11.2018**
(21) Numéro de dépôt: 12756797.2
(22) Date de dépôt: 28.08.2012
(51) Int. Cl.: H04L 12/721, H04L 12/733

(54) **PROCÉDÉ D'ÉCHANGE DE DONNÉES ENTRE NOEUDS D'UNE GRAPPE DE SERVEURS ET GRAPPE DE SERVEURS METTANT EN OEUVRE CE PROCÉDÉ**
VERFAHREN ZUM AUSTAUSCH VON DATEN ZWISCHEN KNOTEN IN EINEM SERVER-CLUSTER UND SERVERCLUSTER ZUR DURCHFÜHRUNG DES VERFAHRENS
METHOD FOR THE EXCHANGE OF DATA BETWEEN NODES OF A SERVER CLUSTER, AND SERVER CLUSTER IMPLEMENTING SAID METHOD

(30) Priorité: 30.08.2011 FR 1157644
(43) Date de publication de la demande: 09.07.2014
(73) Titulaire: Bull S.A.S., 78340 Les Clayes-sous-Bois (FR)
(72) Inventeur: LECOURTIER, Georges, F-78000 Versailles (FR); SPIR, Alain, F-78370 Plaisir (FR)
(74) Mandataire: Bonnet, Michel
(86) Numéro de dépôt international: PCT/FR2012/051946
(87) Numéro de publication internationale: WO 2013/030505

(56) Documents cités:
- DE-A1- 4 023 767
- US-A- 5 105 424
- US-A1- 2011 002 334
- PITT D A ET AL: "TABLE-FREE BRIDGING", IEEE JOURNAL ON SELECTED AREAS IN COMMUNICATIONS, IEEE SERVICE CENTER, PISCATAWAY, US, vol. SAC-05, no. 9, 1 décembre 1987 (1987-12-01), pages 1454-1462, XP000619293, ISSN: 0733-8716, DOI: 10.1109/JSAC.1987.1146667

## Description

La présente invention concerne un procédé d'échange de données entre noeuds d'une grappe de serveurs et une grappe de serveurs mettant en oeuvre ce procédé.

Elle porte plus précisément sur une grappe de serveurs comportant une pluralité de noeuds interconnectés entre eux par un réseau d'interconnexion géographique comportant une pluralité de segments de transmission reliant les noeuds entre eux.

Une grappe de serveurs de ce type prend généralement la forme d'une installation informatique comprenant plusieurs ordinateurs en réseau, apparaissant de l'extérieur comme un calculateur à très forte puissance de calcul, dit calculateur à haute performance de traitement ou calculateur HPC (de l'Anglais « High Performance Computing »). Une telle installation optimisée permet la répartition de traitements complexes et/ou de calculs parallèles sur au moins une partie des noeuds de la grappe.

L'ensemble des ordinateurs/calculateurs de la grappe de serveurs, des modules de gestion des châssis dans lesquels ils sont généralement intégrés et des modules de gestion des baies informatiques dans lesquels ces châssis sont eux-mêmes généralement intégrés constitue l'ensemble des noeuds de cette grappe, sachant que l'on désigne par le terme de « noeud » un calculateur ou un module de gestion pouvant comporter une ou plusieurs unité(s) de traitement. On peut alors distinguer deux types de noeuds : les noeuds de calcul et les noeuds de service. Les noeuds de calcul sont ceux qui exécutent effectivement les différentes instructions de traitements complexes et/ou calculs parallèles : ils échangent donc des données de calcul entre eux. Ils échangent en outre des données de service avec les noeuds de service qui les supervisent. Les noeuds de service quant à eux échangent uniquement des données de service avec les autres noeuds de la grappe de serveurs.

Les noeuds d'une grappe de serveurs sont en général tous reliés à un même premier réseau d'administration générale fonctionnant selon le protocole IP (TCP/IP notamment), par l'intermédiaire de liaisons de transmission de données par paquets, Ethernet par exemple, pour l'échange de données de service. C'est par exemple entre autre par ce réseau que transitent des messages de notification d'événements tels que des notifications de pannes, d'erreurs ou autres alertes. Parmi ces noeuds, un serveur d'administration générale relié à ce premier réseau peut ainsi échanger des données de service avec l'ensemble des autres noeuds de la grappe de serveurs à partir du moment où chacun de ces noeuds possède une adresse IP unique dans ce premier réseau d'administration.

Pour l'exécution de calculs complexes à grande vitesse, les noeuds d'une grappe de serveurs sont en outre généralement interconnectés entre eux par un deuxième réseau conçu pour la transmission de données de calcul des traitements complexes et/ou calculs parallèles. Ce réseau de gestion des données de calcul, utilisé pour l'exécution des calculs à grande vitesse à l'aide de plusieurs calculateurs sollicités en parallèle, est très performant en termes de vitesse de transmission en permettant à des données d'être transmises en moins d'une microseconde d'un noeud à l'autre de la grappe de serveurs. C'est donc ce deuxième réseau qui sert entre autres pour échanger des données de calcul entre les noeuds parce qu'il est nettement plus rapide en transmission que le premier réseau d'administration.

Les noeuds d'une grappe de serveurs peuvent en outre être interconnectés entre eux par un ou plusieurs autres réseaux, notamment des réseaux de gestion de données de service, éventuellement dédiés à certaines tâches et indépendants des premier et deuxième réseaux.

Au moins l'un des réseaux reliant entre eux les noeuds de la grappe de serveurs, que ce soit le premier réseau d'administration générale, le deuxième réseau de gestion des données de calcul ou l'un des autres réseaux éventuels, comporte une pluralité de segments de transmission reliant chacun point à point deux éléments de la grappe de serveurs tels que deux rangées de baies informatiques, deux baies informatiques d'une même rangée, deux châssis d'une même baie ou deux calculateurs d'un même châssis. Ce réseau est qualifié de réseau d'interconnexion géographique au sens d'une cartographie physique des noeuds du réseau, cette cartographie étant directement corrélée à la topologie du réseau.

Outre leur adresse IP, les noeuds d'une grappe de serveurs sont identifiés de façon unique par une adresse MAC (de l'anglais « Media Access Control ») qui leur est attribuée par construction à partir du moment où ils possèdent une interface IP compatible avec le premier réseau d'administration. C'est ensuite tout l'enjeu d'une politique d'adressage que d'associer une adresse IP à l'adresse MAC de chaque noeud, lors de l'initialisation de ce noeud dans la grappe de serveurs.

Mais si l'interface IP d'accès d'un noeud au premier réseau d'administration n'est pas disponible, notamment lors de son initialisation, ou si le réseau d'administration lui-même n'est pas disponible, alors ce noeud devient inaccessible pour la transmission d'un grand nombre de données de service.

Par ailleurs, la politique d'adressage IP permet de fournir une localisation logique de chaque noeud dans le premier réseau d'administration, mais la localisation géographique réelle d'un noeud quelconque dans ce premier réseau d'administration, dans le deuxième réseau de gestion de données de calcul ou dans l'un quelconque des autres réseaux éventuels est difficile à établir sur la simple base de son adresse MAC. Elle nécessite une vérification et une cartographie établies manuellement par un opérateur se déplaçant de noeud en noeud pour relever les adresses MAC. C'est, d'une part, source d'erreurs et, d'autre part, instable étant donné que les noeuds ont une durée de vie limitée et sont destinés à être remplacés de temps à autres.

En outre, les pannes matérielles et certaines pannes logicielles des noeuds étant généralement identifiables sur les noeuds eux-mêmes à l'aide de panneaux de contrôles, les opérations de maintenance nécessitent elles aussi le déplacement d'opérateurs de noeud en noeud pour des interventions locales.

Selon un procédé d'échange de données connu, des commandes de type « Traceroute » sous Unix ou Linux permettent de connaître un trajet logique suivi par des données en identifiant les noeuds traversés par leurs adresses IP, mais ne permettent pas de localiser géographiquement ces noeuds.

Selon le document US2011/002334, un compteur est utilisé dans un réseau arborescent étant incrémenté ou décrémenté selon que l'on descend ou que l'on monte dans l'arborescence pour suivre les transitions entre les différentes couches d'un paquet de données.

Il peut ainsi être souhaité de prévoir un procédé d'échange de données entre noeuds d'une grappe de serveurs qui permette de s'affranchir d'au moins une partie des problèmes et contraintes précités, notamment qui permette d'avoir une meilleure connaissance des noeuds que leur simple localisation logique dans le réseau d'administration IP.

La portée de la protection est telle que définie par les revendications annexées.

L'invention a donc pour objet un procédé d'échange de données entre noeuds d'une grappe de serveurs comportant une pluralité de noeuds interconnectés entre eux par un réseau d'interconnexion géographique comportant une pluralité de segments de transmission reliant les noeuds entre eux, le procédé comportant :
- l'émission par un noeud, dit noeud émetteur, de données destinées à au moins un autre noeud, dit noeud récepteur,
- la transmission de ces données à l'aide du réseau d'interconnexion géographique,
- la réception des données par le noeud récepteur,
caractérisé en ce que les données sont fournies au noeud récepteur avec une information relative aux segments de transmission du réseau d'interconnexion géographique traversés entre le noeud émetteur et ce noeud récepteur lors de leur transmission.

Ainsi, ce procédé d'échange de données permet d'identifier le trajet suivi par les données entre le noeud émetteur et le noeud récepteur dans le réseau d'interconnexion géographique, ce qui revient à identifier la localisation géographique relative de ces deux noeuds lorsque le réseau d'interconnexion est géographiquement clairement structuré. C'est notamment le cas d'un réseau d'interconnexion géographique constitué de segments de transmission reliant par exemple chacun point à point deux éléments de la grappe de serveurs tels que deux rangées de baies informatiques, deux baies informatiques d'une même rangée, deux châssis d'une même baie ou deux noeuds d'un même châssis.

De façon optionnelle, la pluralité de segments de transmission est organisée selon un nombre limité prédéterminé de directions de liaisons et l'information relative aux segments de transmission traversés est exprimée dans un système de coordonnées exprimées dans ces directions de liaisons.

De façon optionnelle également, l'information relative aux segments de transmission traversés comporte au moins un compteur incrémenté ou décrémenté dès qu'un segment de transmission correspondant est traversé par les données lors de leur transmission, notamment un compteur par direction de liaisons incrémenté ou décrémenté dès qu'un segment de transmission reliant deux noeuds selon la direction correspondante est traversé par les données lors de leur transmission.

De façon optionnelle également, une valeur d'incrément ou de décrément est associée à chaque segment de transmission et définie en fonction de la présence ou pas d'au moins un noeud supplémentaire de la grappe de serveur non connecté au réseau d'interconnexion géographique mais disposé géographiquement entre les deux noeuds interconnectés par ce segment de transmission

De façon optionnelle également, pour l'attribution d'une adresse géographique à chaque noeud, un procédé selon l'invention peut comporter :
- la sélection d'une origine géographique choisie parmi les noeuds de la grappe de serveurs,
- l'attribution d'une adresse d'origine à cette origine géographique, et l'initialisation du compteur à au moins une valeur déterminée à partir de l'adresse d'origine attribuée,
- la transmission par l'origine géographique, à tous les autres noeuds de la grappe de serveurs, dits noeuds récepteurs, d'un message identifié comme requérant l'attribution d'une adresse géographique et incluant le compteur, cette transmission comportant l'incrémentation ou la décrémentation du compteur dès qu'un segment de transmission correspondant est traversé par le message,
- l'attribution, à chaque noeud récepteur, d'une adresse géographique dans la grappe de serveurs déterminée à partir de la valeur prise par le compteur lorsque le message est reçu par ce noeud récepteur,
- l'enregistrement de l'adresse géographique de chaque noeud dans des moyens de stockage d'adresses de la grappe de serveur.

De façon optionnelle également, l'adresse géographique attribuée à l'un quelconque des noeuds de la grappe de serveurs est enregistrée localement par ce noeud dans des moyens de stockage qu'il comporte.

De façon optionnelle également, pour une vérification de l'intégrité du réseau d'interconnexion géographique et des adresses géographiques attribuées, un procédé selon l'invention peut comporter :
- l'initialisation du compteur à au moins une valeur déterminée à partir de l'adresse géographique d'un noeud administrateur chargé de vérifier ladite intégrité,
- la transmission par ce noeud administrateur, à tous les autres noeuds de la grappe de serveurs, dits noeuds récepteurs, d'un message identifié comme requérant une vérification de ladite intégrité et incluant le compteur, cette transmission comportant l'incrémentation ou la décrémentation du compteur dès qu'un segment de transmission correspondant est traversé par le message,
- le renvoi au noeud administrateur, par au moins une partie des noeuds récepteurs, de messages de validation ou d'erreur en réponse au message de requête,
- la détection d'un dysfonctionnement éventuel du réseau d'interconnexion géographique ou d'une incohérence éventuelle dans l'attribution des adresses géographiques sur la base des messages renvoyés au noeud administrateur.

De façon optionnelle également :
- à l'occasion de l'émission, par le noeud émetteur, de données destinées au noeud récepteur, le compteur est initialisé à au moins une valeur déterminée à partir de l'adresse géographique du noeud émetteur,
- lors de la transmission de ces données à l'aide du réseau d'interconnexion géographique, le compteur est incrémenté ou décrémenté dès qu'un segment de transmission correspondant est traversé par un message comportant ces données et les données sont en outre transmises avec au moins une valeur correspondant à l'adresse géographique du noeud récepteur,
- les données sont considérées comme ayant atteint le noeud récepteur lorsque la valeur du compteur est égale à la valeur d'adresse géographique du noeud récepteur transmise avec les données.

De façon optionnelle également, les données transmises par le noeud émetteur vers le noeud récepteur comportent l'un des éléments de l'ensemble constitué :
- d'une requête d'attribution d'adresse géographique au noeud récepteur, le noeud émetteur de cette requête étant une origine géographique choisie parmi les noeuds de la grappe de serveurs,
- d'une requête de vérification d'adresse géographique du noeud récepteur, le noeud émetteur de cette requête étant une origine géographique choisie parmi les noeuds de la grappe de serveurs,
- d'une requête d'adresse MAC, le noeud émetteur de cette requête étant un noeud administrateur des adresses MAC de tous les noeuds de la grappe de serveurs,
- d'une réponse à une requête d'adresse MAC,
- d'une commande d'émulation d'une fonction de commande d'un panneau de contrôle du noeud récepteur, notamment d'une fonction de redémarrage, de restauration de fonctionnement, d'initialisation ou de maintenance, et
- d'une commande d'émulation d'une fonction de contrôle d'un panneau de contrôle du noeud récepteur, notamment d'une fonction de signalisation ou d'alarme.

L'invention a également pour objet une grappe de serveurs comportant une pluralité de noeuds interconnectés entre eux par un réseau d'interconnexion géographique comportant une pluralité de segments de transmission reliant les noeuds entre eux, la grappe de serveurs comportant des moyens de transmission, à l'aide du réseau d'interconnexion géographique, de données émises par un noeud, dit noeud émetteur, et destinées à au moins un autre noeud, dit noeud récepteur, caractérisée en ce qu'elle comporte :
- des moyens de génération d'une information relative aux segments de transmission du réseau d'interconnexion géographique traversés entre ce noeud émetteur et ce noeud récepteur lors de leur transmission, et
- des moyens de fourniture, au noeud récepteur, de cette information avec les données transmises.

De façon optionnelle :
- les noeuds sont en outre interconnectés entre eux par un réseau d'administration adapté pour la transmission de données de service selon le protocole IP et comportent chacun une interface réseau d'adresse MAC prédéfinie,
- des moyens d'adressage sont prévus pour l'attribution d'une adresse géographique à chaque noeud de la grappe de serveur sur la base de l'information relative aux segments de transmission du réseau d'interconnexion géographique traversés entre un noeud choisi comme origine géographique et chaque noeud, et
- des moyens d'enregistrement sont prévus pour l'enregistrement et le stockage de l'adresse géographique attribuée à chaque noeud en association avec son adresse MAC.

De façon optionnelle également :
- chaque noeud est inclus dans un châssis, lui-même inclus dans une baie informatique, elle-même incluse dans une rangée de baies informatiques, la grappe de serveur comportant une pluralité de rangées de baies informatiques,
- le réseau d'interconnexion géographique comporte une pluralité de segments d'interconnexion des rangées entre elles, de segments d'interconnexion de baies informatiques d'une même rangée entre elles, de segments d'interconnexion de châssis d'une même baie informatique entre eux et de segments d'interconnexion de noeuds d'un même châssis entre eux,
la grappe de serveurs comportant des moyens d'échange de données entre le noeud émetteur et chaque noeud récepteur conçus pour transmettre, avec ces données, au moins une information relative au nombre de segments d'interconnexion de rangées traversés entre le noeud émetteur et ce noeud récepteur, au nombre de segments d'interconnexion de baies informatiques traversés entre le noeud émetteur et ce noeud récepteur et au nombre de segments d'interconnexion de châssis traversés entre le noeud émetteur et ce noeud récepteur.

De façon optionnelle également, l'information relative aux segments de transmission traversés entre le noeud émetteur et chaque noeud récepteur comportant au moins un champ d'indication du nombre de segments d'interconnexion de rangées traversés entre le noeud émetteur et ce noeud récepteur, un champ d'indication du nombre de segments d'interconnexion de baies informatiques traversés entre le noeud émetteur et ce noeud récepteur et un champ d'indication du nombre de segments d'interconnexion de châssis traversés entre le noeud émetteur et ce noeud récepteur, des moyens d'incrémentation ou de décrémentation sont prévus pour l'incrémentation ou la décrémentation de chacun de ces champs dès qu'un segment correspondant est traversé par un message incluant des données échangées entre le noeud émetteur et ce noeud récepteur.

De façon optionnelle également, une grappe de serveurs selon l'invention peut comporter :
- un premier réseau d'administration générale interconnectant tous les noeuds entre eux, et
- au moins un second réseau de gestion de données de calcul destinées à être échangées entre les noeuds, interconnectant au moins une partie des noeuds entre eux,
et ledit réseau d'interconnexion géographique peut être un réseau supplémentaire, distinct du réseau d'administration générale et du réseau de gestion de données de calcul, notamment un réseau mettant en oeuvre le protocole HDLC.

L'invention sera mieux comprise à l'aide de la description qui va suivre, donnée uniquement à titre d'exemple et faite en se référant aux dessins annexés dans lesquels :
- la figure 1 représente schématiquement la structure générale d'une grappe de serveurs selon un mode de réalisation de l'invention,
- la figure 2 détaille schématiquement la structure générale d'une baie informatique de la grappe de serveurs de la figure 1,
- la figure 3 illustre les étapes successives d'un procédé d'échange de données mis en oeuvre dans la grappe de serveurs de la figure 1,
- les figures 4 et 6 illustrent des applications et variantes possibles du procédé de la figure 3, et
- la figure 5 illustre les étapes successives d'un procédé de parcours de la grappe de serveurs de la figure 1 pour une mise en oeuvre itérative du procédé de la figure 4.

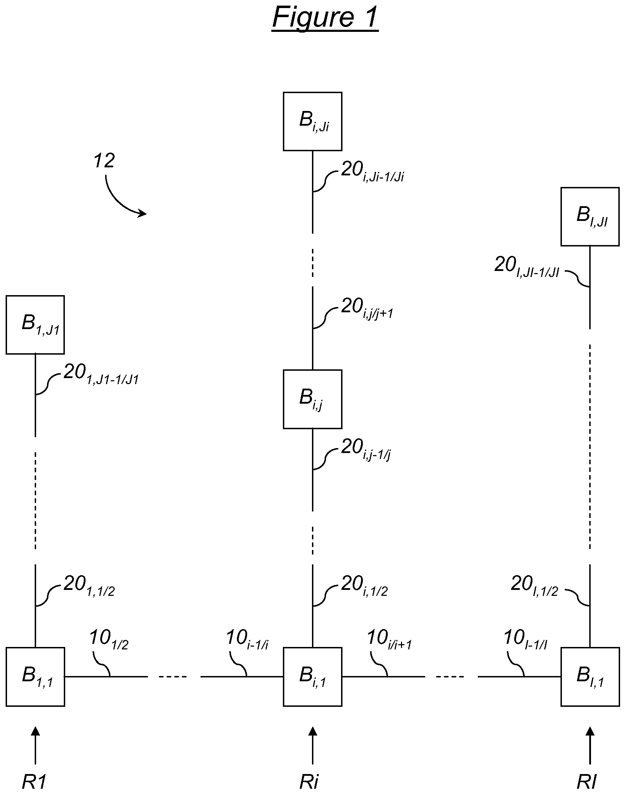

La grappe de serveurs 12 illustrée sur la figure 1 comporte une pluralité de baies informatiques notées B_{i,j} en fonction de leur position. Cette grappe de serveurs est par exemple organisée en plusieurs rangées R1, ..., Ri, ... RI, chacune de ces rangées comportant au moins une baie informatique. On notera que le nombre de baies par rangée n'est pas nécessairement identique d'une rangée à l'autre. Ainsi, dans l'exemple illustré sur la figure 1, la première rangée de baies R1 comporte J1 baies informatiques notées B_{1,1}, ..., B_{1,J1}, la i-ème rangée Ri comporte Ji baies informatiques notées B_{i,1}, ..., B_{i,Ji} et la dernière rangée de baies RI comporte JI baies informatiques notées B_{I,1}, ..., B_{I,JI}. En particulier, la j-ème baie informatique de la i-ème rangée Ri est notée B_{i,j}.

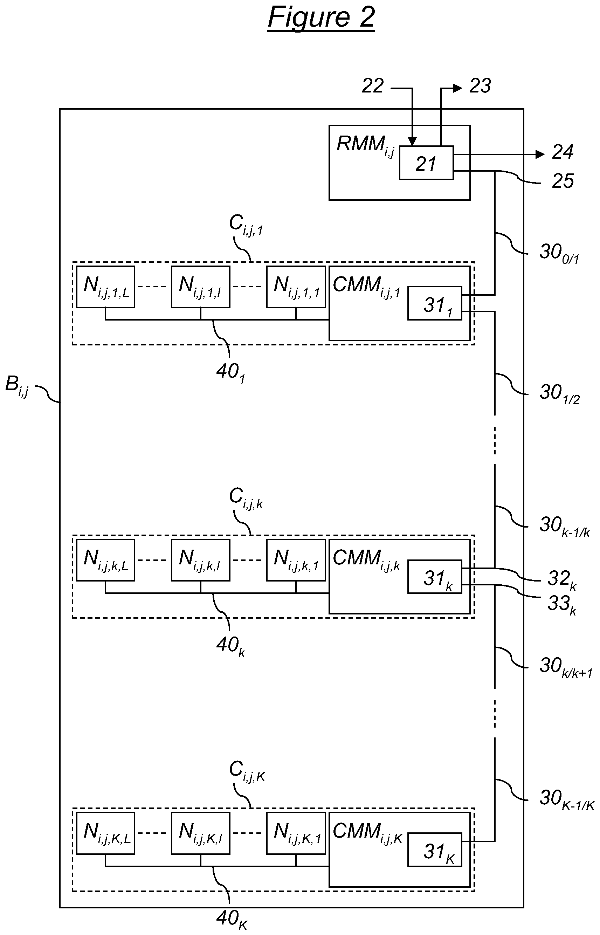

Comme cela sera par ailleurs détaillé en référence à la figure 2, et dans une vision simplifiée de la grappe de serveurs 12 où chaque baie informatique est opérationnelle et munie de moyens de calculs, chaque baie informatique comporte elle-même au moins un châssis, chaque châssis de chaque baie informatique comportant lui-même au moins un calculateur, c'est-à-dire un noeud de calcul. Un tel calculateur est, comme déjà indiqué précédemment, un noeud de la grappe de serveurs 12 et comporte une ou plusieurs unité(s) de traitement. Selon cette architecture classique, chaque noeud de la grappe de serveurs 12 est donc inclus dans un châssis, lui-même inclus dans une baie informatique, elle-même incluse dans l'une des rangées R1, ..., Ri, ... RI.

La grappe de serveurs 12 est destinée à être raccordée à un réseau dorsal (non représenté) généralement appelé réseau backbone (de l'Anglais « backbone network ») et elle apparaît ainsi de l'extérieur, c'est à dire du point de vue d'un terminal de commande relié également au réseau backbone, comme une entité unique de calculateur HPC.

Certains des noeuds de la grappe de serveurs 12 sont des noeuds de service, par exemple les modules de gestion de châssis et les modules de gestion de baies informatiques. Certains calculateurs dédiés de la grappe de serveurs en font également partie : par exemple une interface de traitement, dite interface Login, un serveur d'administration générale, un serveur de gestion de données descriptives de la grappe, un serveur de gestion des entrées/sorties et un serveur de sauvegarde. La plupart de ces calculateurs dédiés sont dupliqués pour des raisons de sécurité. Les autres noeuds de la grappe de serveurs 12 sont des noeuds de calcul dont l'activité est gérée notamment par le serveur d'administration générale.

Les différents noeuds précités de la grappe de serveurs 12 sont interconnectés entre eux à l'aide de plusieurs réseaux.

De façon optionnelle, un ou plusieurs réseaux de service (non illustrés) peuvent relier spécifiquement des serveurs de calcul rapide entre eux pour constituer un ou plusieurs sous-réseaux dans lesquels les transferts de données de service sont accélérés. Ils peuvent prendre la forme de réseaux en bus, en anneau, maillés ou selon d'autres topologies connues.

Par ailleurs, un réseau d'administration (non illustré) fonctionnant selon le protocole IP, en général de type Ethernet, permet de relier le serveur d'administration générale de la grappe de serveurs 12 à tous les autres noeuds. De façon optionnelle, ce réseau d'administration générale peut être doublé d'un réseau de contrôle primaire dédié à la mise sous tension, au démarrage, à l'arrêt et au traitement de certaines erreurs primaires prédéterminées, dites erreurs fatales et générant des fichiers Core, des serveurs qu'il administre. Un tel réseau d'administration générale présente par exemple un débit de l'ordre de 100 Mbits/s.

Enfin, un ou plusieurs autres réseaux, dits réseaux de gestion de données de calcul, relient entre eux au moins tous les noeuds de calcul, voire tous les noeuds de calcul et de service, de la grappe de serveurs 12. Ils ont des caractéristiques de débit très élevées par rapport aux caractéristiques de débit du réseau d'administration. C'est en effet par ce(s) réseau(x) de gestion de données de calcul que transitent entre autres les données de calcul nécessaires à l'exécution des instructions de traitement transmises à la grappe de serveurs 12. Ils peuvent prendre la forme de réseaux en arbre (de type tree ou fat-tree), en anneau, maillés ou selon d'autres topologies connues. De tels réseaux de gestion de données de calcul présentent par exemple un débit de l'ordre de 40 Gbits/s par lien.

Au moins l'un des réseaux reliant les noeuds de la grappe de serveurs, que ce soit le ou les réseaux de service, le réseau d'administration, le ou les réseaux de gestion de données de calcul, ou un éventuel autre réseau dédié, comporte une pluralité de segments de transmission reliant chacun point à point deux éléments de la grappe de serveurs, ces segments étant organisés selon un nombre limité prédéterminé de directions de liaisons. Par exemple, selon une première direction, certains de ces segments de transmission peuvent relier deux rangées voisines de baies informatiques entre elles ; selon une deuxième direction, certains de ces segments de transmission peuvent relier deux baies informatiques voisines d'une même rangée entre elles ; selon une troisième direction, certains de ces segments de transmission peuvent relier deux châssis voisins d'une même baie entre eux ; et selon une quatrième direction, certains de ces segments de transmission peuvent relier deux calculateurs voisins d'un même châssis entre eux.

Ce réseau est, dans la suite de la description, qualifié de réseau d'interconnexion géographique et va être utilisé avantageusement pour la transmission de données de service. Il met par exemple en oeuvre le protocole HDLC. S'il s'agit d'un réseau dédié différent du réseau d'administration générale et des réseaux de gestion de données de calcul, il peut par exemple présenter un débit de l'ordre de 1 Mbits/s.

A un premier niveau illustré sur la figure 1 correspondant à la première direction, et à titre d'exemple non limitatif, le réseau d'interconnexion géographique comporte une pluralité de segments de transmission 10_{1/2}, ..., 10_{i-1/i}, 10_{i/i+1}, ..., 10_{I-1/I} pour une interconnexion des rangées R1, ..., Ri, ... RI entre elles deux à deux : plus précisément, le segment 10_{1/2} relie les rangées R1 et R2 entre elles par leurs premières baies B_{1,1} et B_{2,1}, ... le segment 10_{i-1/i} relie les rangées Ri-1 et Ri entre elles par leurs premières baies B_{i-1,1} et B_{i,1}, le segment 10_{i/i+1} relie les rangées Ri et Ri+1 entre elles par leurs premières baies B_{i,1} et B_{i+1,1}, ... et le segment 10_{I-1/I} relie les rangées RI-1 et RI entre elles par leurs premières baies B_{I-1,1} et B_{I,1}. Selon cette première direction de liaison, les segments de transmission 10_{1/2}, ..., 10_{i-1/i}, 10_{i/i+1}, ..., 10_{I-1/I} comportent par exemple des câbles d'environ 10 mètres chacun.

A un deuxième niveau illustré sur la figure 1 correspondant à la deuxième direction, et à titre d'exemple non limitatif, le réseau d'interconnexion géographique comporte en outre une pluralité de segments de transmission 20_{1,1/2}, ..., 20_{1,J1-1/J1} pour une interconnexion des baies informatiques de la première rangée R1 entre elles deux à deux, ... une pluralité de segments de transmission 20_{i,1/2}, ..., 20_{i,Ji-1/Ji} pour une interconnexion des baies informatiques de la i-ème rangée Ri entre elles deux à deux, ... et une pluralité de segments de transmission 20_{I,1/2}, ..., 20_{I,JI-1/JI} pour une interconnexion des baies informatiques de la dernière rangée RI entre elles deux à deux : plus précisément, le segment 20_{1,1/2} relie les baies informatiques B_{1,1} et B_{1,2} entre elles, ... le segment 20_{1,J1-1/J1} relie les baies informatiques B_{1,J1-1} et B_{1,J1} entre elles, le segment 20_{i,1/2} relie les baies informatiques B_{i,1} et B_{i,2} entre elles, ... le segment 20_{i,j-1/j} relie les baies informatiques B_{i,j-1} et B_{1,j} entre elles, le segment 20_{i,j/j+1} relie les baies informatiques B_{i,j} et B_{1,j+1} entre elles, ... le segment 20_{i,Ji-1/Ji} relie les baies informatiques B_{i,Ji-1} et B_{1,Ji} entre elles, le segment 20_{I,1/2} relie les baies informatiques B_{I,1} et B_{I,2} entre elles, ... et le segment 20_{1,JI-1/JI} relie les baies informatiques B_{1,JI-1} et B_{1,JI} entre elles. Selon cette deuxième direction de liaison, les segments de transmission 20_{1,1/2}, ..., 20_{1,J1-1/J1}, ... 20_{i,1/2}, ..., 20_{i,Ji-1/Ji}, 20_{I,1/2}, ..., 20_{1,JI-1/JI} comportent par exemple des câbles d'environ 1 mètre chacun.

La structure de la grappe de serveurs 12, telle que décrite précédemment en référence à la figure 1, est appropriée pour la mise en oeuvre de l'invention, mais d'autres configurations possibles de grappes, notamment de type calculateur HPC, comprenant tout ou partie des éléments précités, voire comprenant d'autres éléments en cas de plus grande complexité et interconnectés différemment, conviennent aussi. Notamment la grappe de serveurs 12 peut comporter des baies informatiques (de stockage, temporairement non opérationnelles, ...) qui ne sont pas raccordées au réseau d'interconnexion géographique, bien qu'il puisse être souhaité de les localiser géographiquement.

La figure 2 illustre en détail la structure générale de l'une quelconque des baies informatiques de la figure 1, notée B_{i,j}.

Cette baie informatique B_{i,j} comporte un module RMM_{i,j} de gestion de baie. Elle comporte en outre une pluralité de châssis C_{i,j,1}, ..., C_{i,j,k}, ... C_{i,j,K} superposés. Chaque châssis comporte son propre module CMM_{i,j,1}, ..., CMM_{i,j,k}, ... CMM_{i,j,K} de gestion de châssis et une pluralité de calculateurs. Pour simplifier les notations, il est considéré, dans l'exemple de la figure 2, que tous les châssis de la baie informatique B_{i,j} comportent un même nombre L de calculateurs, mais dans la réalité, ce nombre peut tout à fait être différent d'un châssis à l'autre et d'une baie à l'autre. Ainsi, conformément à ce qui est illustré, le châssis C_{i,j,1} comporte L calculateurs N_{i,j,1,1}, ..., N_{i,j,1,1}, ... N_{i,j,1,L}, le châssis C_{i,j,k} comporte L calculateurs N_{i,j,k,1}, ..., N_{i,j,k,l}, ... N_{i,j,k,L} et le châssis C_{i,j,K} comporte L calculateurs N_{i,j,K,1}, ..., N_{i,j,K,l}, ... N_{i,j,K,L}.

Le module RMM_{i,j} de gestion de baie comporte un circuit logique programmable 21 permettant l'échange de données entre la baie informatique B_{i,j} et d'autres baies de la grappe de serveurs 12 par le réseau d'interconnexion géographique. Ce circuit logique 21 comporte fonctionnellement d'une façon générale quatre ports 22, 23, 24 et 25 d'échange bidirectionnel de données.

Le premier port 22 est conçu pour raccorder le module de gestion RMM_{i,j} de la baie B_{i,j} au module de gestion d'une autre baie de la grappe de serveurs considérée comme située en amont de la baie B_{i,j} dans le sens d'une diffusion d'une information dans la grappe de serveurs à partir d'une origine géographique prédéterminée. Selon l'installation illustrée sur la figure 1 et en choisissant arbitrairement la baie informatique B_{1,1} comme origine géographique, la baie située en amont de la baie informatique B_{i,j} est B_{i-1,1} si j = 1 (c'est-à-dire lorsque l'on se trouve en tête de rangée) et B_{i,j-1} si j > 1. Par conséquent, le premier port 22 est conçu pour raccorder le module de gestion RMM_{i,j} de la baie B_{i,j} au module de gestion RMM_{i-1,1} de la baie B_{i-1,1} si j = 1 et au module de gestion RMM_{i,j-1} de la baie B_{i,j-1} si j > 1.

Le deuxième port 23 est conçu pour raccorder le module de gestion RMM_{i,j} de la baie B_{i,j} au module de gestion d'une autre baie de la grappe de serveurs considérée comme située en aval de la baie B_{i,j} dans le sens de diffusion d'une information dans la grappe de serveurs à partir de l'origine géographique et située dans la même rangée Ri. Si une telle baie existe, et conformément aux sens de diffusion choisi, le deuxième port 23 relie le module de gestion RMM_{i,j} de la baie B_{i,j} au module de gestion RMM_{i,j+1} de la baie B_{i,j+1}.

Le troisième port 24 est utile aux premières baies B_{i,1} de chaque rangée Ri, pour tout i < I. Il est conçu pour raccorder le module de gestion RMM_{i,1} de la baie B_{i,1} au module de gestion RMM_{i+1,1} de la baie B_{i+1,1}, considérée elle aussi comme située en aval de la baie B_{i,1} dans le sens de diffusion de l'exemple de la figure 1.

Enfin, le quatrième port 25 permet, à un troisième niveau du réseau d'interconnexion géographique, de raccorder le module de gestion RMM_{i,j} de la baie B_{i,j} aux châssis C_{i,j,1}, ..., C_{i,j,k}, ... C_{i,j,K} de cette même baie.

A ce troisième niveau illustré sur la figure 2 correspondant à la troisième direction, et à titre d'exemple non limitatif, le réseau d'interconnexion géographique comporte une pluralité de segments de transmission 30_{0/1}, 30_{1/2}, ..., 30_{k-1/k}, 30_{k/k+1}, ..., 30_{K-1/K} pour une interconnexion des châssis C_{i,j,1}, ..., C_{i,j,k}, ... C_{i,j,K} entre eux deux à deux et leur raccordement au module de gestion RMM_{i,j} : plus précisément, le segment 30_{0/1} relie le module de gestion RMM_{i,j} de la baie B_{i,j} au module de gestion CMM_{i,j,1} du châssis C_{i,j,i}, le segment 30_{1/2} relie le module de gestion CMM_{i,j,1} du châssis C_{i,j,1} au module de gestion CMM_{i,j,2} du châssis C_{i,j,2}, ... le segment 30_{k-1/k} relie le module de gestion CMM_{i,j,k-1} du châssis C_{i,j,k-1} au module de gestion CMM_{i,j,k} du châssis C_{i,j,k}, le segment 30_{k/k+1} relie le module de gestion CMM_{i,j,k} du châssis C_{i,j,k} au module de gestion CMM_{i,j,k+1} du châssis C_{i,j,k+1}, ... et le segment 30_{K-1/K} relie le module de gestion CMM_{i,j,K-1} du châssis C_{i,j,K-1} au module de gestion CMM_{i,j,K} du châssis C_{i,j,K}. Concrètement, le module de gestion CMM_{i,j,k} de chaque châssis C_{i,j,k} comporte un circuit logique programmable 31ₖ comportant fonctionnellement un premier port 32ₖ d'échange bidirectionnel de données connecté au segment de transmission 30_{k-1/k} et un second port 33ₖ d'échange bidirectionnel de données connecté (sauf pour CMM_{i,j,K}) au segment de transmission 30_{k/k+1}. Selon cette troisième direction de liaison, les segments de transmission 30_{0/1}, 30_{1/2}, ..., 30_{k-1/k}, 30_{k/k+1}, ..., 30_{K-1/K} comportent par exemple des câbles d'environ 50 centimètres chacun.

A un quatrième niveau illustré sur la figure 2 correspondant à la quatrième direction, et à titre d'exemple non limitatif, le réseau d'interconnexion géographique comporte une pluralité de segments de transmission 40₁, ..., 40ₖ, ..., 40_{K} pour une interconnexion des calculateurs de chaque châssis entre eux et leur raccordement au module de gestion CMM_{i,j,k} du châssis concerné : plus précisément, le segment 40₁ est par exemple un bus multipoints de fond de panier informatique qui relie le module de gestion CMM_{i,j,1} du châssis C_{i,j,1} à tous les calculateurs N_{i,j,1,1}, ..., N_{i,j,1,l}, ... N_{i,j,1,L}, ... le segment 40ₖ est par exemple un bus multipoints de fond de panier informatique qui relie le module de gestion CMM_{i,j,k} du châssis C_{i,j,k} à tous les calculateurs N_{i,j,k,1}, ..., N_{i,j,k,l}, ... N_{i,j,k,L}, ... et le segment 40_{K} est par exemple un bus multipoints de fond de panier informatique qui relie le module de gestion CMM_{i,j,K} du châssis C_{i,j,K} à tous les calculateurs N_{i,j,K,1}, ..., N_{i,j,K,l}, ... N_{i,j,K,L}. En variante, les bus multipoints 40₁, ..., 40ₖ, ..., 40_{K} pourraient être remplacés par une succession de câbles.

La structure de la baie informatique B_{i,j}, telle que décrite précédemment en référence à la figure 2, est appropriée pour la mise en oeuvre de l'invention, mais d'autres configurations possibles de baies comprenant tout ou partie des éléments précités, voire comprenant d'autres éléments en cas de plus grande complexité et interconnectés différemment, conviennent aussi.

On note que, conformément à la structure géographique proposée en référence aux figures 1 et 2 selon quatre directions de liaisons prédéterminées, chaque noeud N_{i,j,k,l} de la grappe de serveurs 12 est aisément spatialement localisable par un système de coordonnées (i, j, k, l) directement lié à l'organisation des segments de transmission selon ces directions, i, j et k indiquant le nombre de segments de premier, deuxième et troisième niveaux (i.e. première, deuxième et troisième directions) séparant ce noeud d'une origine géographique prédéterminée, I indiquant la position, au quatrième niveau (i.e. quatrième direction), du noeud dans son châssis C_{i,j,k}. Ceci est vrai notamment dans une vision volontairement simplifiée de la grappe de serveurs 12 où chaque baie informatique est opérationnelle, munie de moyens de calculs et où toutes les baies informatiques sont interconnectées entre elles par le réseau d'interconnexion géographique.

Ainsi, en identifiant le trajet suivi par des données, lors d'un échange entre un noeud émetteur de ces données et au moins un noeud récepteur, à l'aide du système de coordonnées (i, j, k, l) et en fournissant les données au noeud récepteur avec une information relative au trajet suivi dans ce système de coordonnées, il devient aisé de localiser géographiquement et automatiquement, au moins de façon relative, le noeud émetteur et/ou le noeud récepteur.

En réalité, une grappe de serveurs peut en outre comporter des baies non connectées au réseau d'interconnexion géographique et donc *a priori* difficiles à repérer géographiquement, voire même susceptibles de bouleverser le système de coordonnées (i, j, k, l) directement lié à l'organisation des segments de transmission précités. Il peut par exemple s'agir de baies de stockage ne comportant pas de noeuds de calcul ou de baies informatiques munies de moyens de calcul mais temporairement non opérationnelles parce que par exemple mises en maintenance prolongée. Elles ont pourtant concrètement une localisation géographique bien définie dans la grappe de serveurs 12. Pour prendre en compte ce genre de situation, des sauts peuvent être prévus et prédéfinis localement dans le système de coordonnées (i, j, k, l), par exemple sur les indices i et j. A titre purement illustratif : si un segment de premier niveau court-circuite une telle baie non raccordée au réseau d'interconnexion géographique, il compte double pour la coordonnée i et si un segment de deuxième niveau court-circuite une telle baie non raccordée au réseau d'interconnexion géographique, il compte double pour la coordonnée j. Ainsi, le système de coordonnées (i, j, k, l) bien que directement lié à l'organisation des segments de transmission du réseau d'interconnexion géographique, reste cohérent avec la réalité géographique de la grappe de serveurs 12.

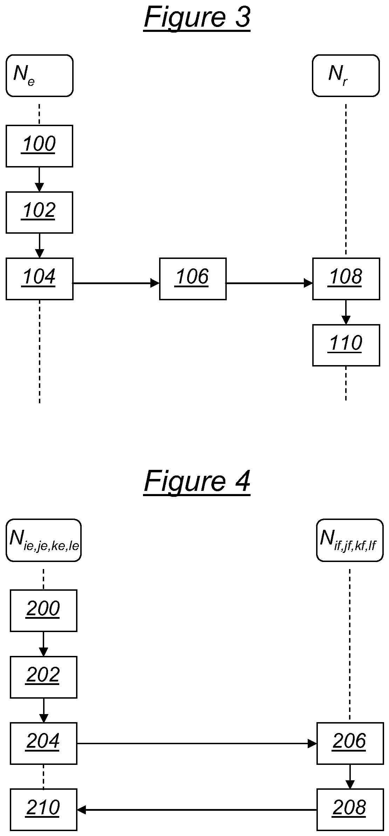

Un procédé d'échange de données entre noeuds de la grappe de serveurs 12 incluant une identification du trajet suivi va donc maintenant être présenté dans son principe général en référence à la figure 3. Pour sa mise en oeuvre et selon différents modes de réalisation possibles, les circuits logiques programmables 21, 31₁, ..., 31ₖ, ..., 31_{K} de chaque baie informatique B_{i,j} sont munis de moyens d'incrémentation ou décrémentation de compteurs définis sur la base du système de coordonnées (i, j, k, l). Ces moyens d'incrémentation ou décrémentation sont par exemple implémentés sous forme logicielle ou matérielle pour mettre à jour des valeurs de coordonnées dans ce système de coordonnées (i, j, k, l) en fonction du port d'échange bidirectionnel de données par lequel les données arrivent ou partent dans le circuit logique programmable concerné et en fonction d'une règle d'incrémentation ou décrémentation qui peut être générale ou spécifique à chaque circuit logique programmable. Plus précisément, la règle d'incrémentation ou décrémentation peut être générale et fixée à un incrément ou décrément d'une unité dans le cas simplifié de la grappe de serveurs 12 illustrée sur les figures 1 et 2 où chaque baie informatique est opérationnelle, munie de moyens de calculs et où toutes les baies informatiques sont interconnectées entre elles par le réseau d'interconnexion géographique. Pour s'adapter à la réalité d'une grappe de serveurs dans laquelle certaines baies ne sont pas raccordées au réseau d'interconnexion géographique, des règles spécifiques (incrément ou décrément d'au moins 2 unités dans une ou plusieurs directions données, ...) peuvent être prévues dans certains circuits logiques programmables voisins de telles baies non raccordées.

Conformément à une première étape 100 du procédé d'échange de données de la figure 3, une trame de données comportant des données destinées à au moins un autre noeud, dit noeud récepteur Nᵣ, est générée par un noeud émetteur Nₑ. Cette trame comporte, en plus desdites données, quatre compteurs qui permettront d'identifier le trajet qui sera suivi par la trame pour son acheminement jusqu'au noeud récepteur Nᵣ. Plus précisément, un premier compteur Ci est destiné à être mis à jour, par incrémentation ou décrémentation selon l'application visée et le mode de réalisation choisi, en fonction du nombre de segments de transmission de premier niveau traversés entre le noeud émetteur Nₑ et le noeud récepteur Nᵣ. Un deuxième compteur Cj est destiné à être mis à jour, par incrémentation ou décrémentation selon l'application visée et le mode de réalisation choisi, en fonction du nombre de segments de transmission de deuxième niveau traversés entre le noeud émetteur Nₑ et le noeud récepteur Nᵣ. Un troisième compteur Ck est destiné à être mis à jour, par incrémentation ou décrémentation selon l'application visée et le mode de réalisation choisi, en fonction du nombre de segments de transmission de troisième niveau traversés entre le noeud émetteur Nₑ et le noeud récepteur Nᵣ. Enfin, un quatrième compteur Cl est destiné à être mis à jour, par incrémentation ou décrémentation selon l'application visée et le mode de réalisation choisi, en fonction du nombre de segments de transmission de quatrième niveau traversés entre le noeud émetteur Nₑ et le noeud récepteur Nᵣ. Bien entendu, comme indiqué précédemment, la règle d'incrémentation ou décrémentation appliquée à chaque traversée de segment de premier, deuxième, troisième ou quatrième niveau peut être adaptée localement en fonction de la réalité topologique de la grappe de serveurs pouvant inclure des éléments non connectés au réseau d'interconnexion géographique.

Lors d'une étape 102 d'initialisation, les compteurs Ci, Cj, Ck et Cl sont initialisés à des valeurs Ci(e), Cj(e), Ck(e) et CI(e) qui sont définies en fonction de l'application visée et du mode de réalisation choisi.

Ensuite, lors d'une étape 104, la trame de données est émise par le noeud émetteur Nₑ.

L'étape 106 suivante comporte la transmission de la trame de données dans le réseau d'interconnexion géographique. Au cours de cette étape, selon le mode de réalisation et l'application choisis, chaque fois qu'un circuit logique programmable 21, 31₁, ..., 31ₖ, ..., 31_{K} reçoit ou émet cette trame, il incrémente ou décrémente la valeur de l'un des compteurs Ci, Cj, Ck et Cl en fonction du port par lequel il l'émet ou la reçoit et en fonction de la règle d'incrémentation ou décrémentation qui peut être générale ou qui peut lui être spécifique.

Ensuite, lors d'une étape 108, la trame de données est reçue par le noeud récepteur Nᵣ.

Enfin, lors d'une dernière étape 110, le noeud récepteur extrait de la trame de données les valeurs des compteurs à l'arrivée, notées Ci(r), Cj(r), Ck(r) et CI(r).

Dans le procédé d'échange de données détaillé ci-dessus, les coordonnées de l'émetteur et du récepteur ont été exprimées de façon générale dans le système de coordonnées complet (i, j, k, l). Cela signifie que l'on suppose a priori que n'importe quel noeud de calcul de la grappe de serveurs 12 peut être émetteur ou récepteur. Mais l'émetteur ou le récepteur peut également être le circuit logique programmable d'un module de gestion de baie ou de châssis auquel cas ses coordonnées peuvent être exprimées plus simplement de façon restreinte dans le système de coordonnées incomplet (i, j, k).

Différentes applications du procédé d'échange de données décrit ci-dessus vont maintenant être détaillées, selon différents modes de réalisation possibles.

Une première application consiste à émettre une requête particulière, depuis un premier noeud émetteur, par exemple un serveur d'administration, vers un unique second noeud récepteur, par exemple un noeud de calcul. Cette requête peut notamment être une requête d'adresse MAC émise par un noeud administrateur des adresses MAC, pour faire le lien entre une adresse géographique donnée et l'adresse MAC du noeud situé à cette adresse géographique. Ce mode de transmission depuis un émetteur vers un unique récepteur est généralement qualifié de mode unicast. Un avantage de ce mode de transmission est que, sur réception de la requête, le récepteur renvoie généralement un message de réponse ou d'acquittement à l'émetteur, par opposition au mode broadcast (diffusion d'une requête depuis un émetteur vers tous les autres noeuds du réseau) qui ne prévoit généralement pas de retour.

Selon cette première application et selon un mode de réalisation possible, en supposant que l'adresse géographique du noeud émetteur est (iₑ, jₑ, kₑ, lₑ) et que celle du noeud récepteur est (i_{f}, j_{f}, k_{f}, l_{f}), les compteurs Ci, Cj, Ck et Cl peuvent être initialisés à l'adresse d'émission, soit Ci(e) = iₑ, Cj(e) = jₑ, Ck(e) = kₑ et CI(e) = lₑ, et les circuits logiques programmables 21, 31₁, ..., 31ₖ, ..., 31_{K} de chaque baie informatique B_{i,j} peuvent être munis de moyens d'incrémentation et/ou décrémentation des compteurs en fonction du port d'échange bidirectionnel de données par lequel la requête sort dans le circuit logique programmable concerné.

Plus précisément, dans le circuit programmable 21 du module RMM_{i,j} de gestion de la baie B_{i,j} :
- lorsque la requête sort par le deuxième port 23 : Cj est incrémenté d'une unité,
- lorsque la requête sort par le troisième port 24 (pour toutes les baies B_{i,1}) : Ci est incrémenté d'une unité,
- lorsque la requête sort par le quatrième port 25 (pour toutes les baies B_{i,1}) : Ck est incrémenté d'une unité, et
- lorsque la requête sort par le premier port 22 (ce qui représente le sens contraire de diffusion d'amont en aval défini précédemment) : si j=1, Ci est décrémenté d'une unité, si j>1, Cj est décrémenté d'une unité.

Plus précisément également, dans le circuit programmable 31ₖ du module CMM_{i,j,k} de gestion du châssis C_{i,j,k} :
- lorsque la requête sort par le deuxième port 33ₖ : Ck est incrémenté d'une unité, et
- lorsque la requête sort par le premier port 32ₖ (ce qui représente le sens contraire de diffusion d'amont en aval défini précédemment) : Ck est décrémenté d'une unité.

On remarque que la règle d'incrémentation et/ou décrémentation choisie ci-dessus est d'incrémenter les compteurs d'au moins une unité (une unité par défaut et plus d'une unité localement lorsque des baies non connectées au réseau d'interconnexion géographique s'interposent dans la grappe de serveurs 12) d'amont en aval dans le sens de diffusion défini précédemment. Ce choix est arbitraire et il est facile d'en faire un autre en adaptant alors le mode de réalisation.

Selon ce mode de réalisation également, la requête comporte un champ dans lequel est indiquée l'adresse géographique (i_{f}, j_{f}, k_{f}, l_{f}) du noeud récepteur.

Ainsi, comme illustré sur la figure 4 et selon le mode de réalisation précité, un procédé d'échange de données selon l'invention pour l'envoi d'une requête depuis un noeud émetteur N_{ie,je,ke,le} vers un unique noeud récepteur N_{if,jf,kf,lf} de la grappe de serveurs 12 comporte les étapes suivantes.

Au cours d'une première étape d'initialisation 200, les compteurs Ci, Cj, Ck et Cl sont initialisés à Ci(e) = iₑ, Cj(e) = jₑ, Ck(e) = kₑ et Cl(e) = lₑ.

Lors d'une étape 202, une requête est générée par le noeud émetteur N_{ie,je,ke,le} dont l'adresse géographique est (iₑ, jₑ, kₑ, lₑ). Cette requête comporte par exemple un en-tête l'identifiant spécifiquement en tant que requête destinée à un unique récepteur en mode unicast et inclut également les compteurs Ci, Cj, Ck et Cl à leurs valeurs initiales. Comme indiqué précédemment, elle comporte en outre un champ reprenant l'adresse géographique (i_{f}, j_{f}, k_{f}, l_{f}) du noeud récepteur.

L'étape 204 suivante lance, à partir du noeud émetteur, la transmission de cette requête vers le noeud récepteur à travers le réseau d'interconnexion géographique. Conformément aux règles d'incrémentation et/ou décrémentation précitées pour cette première application et à partir du noeud N_{ie,je,ke,le}, la requête est par exemple dirigée dans le réseau d'interconnexion géographique de manière à toujours rapprocher les valeurs des compteurs Ci, Cj, Ck et Cl de l'adresse géographique cible (i_{f}, j_{f}, k_{f}, l_{f}) indiquée dans la requête.

Lorsqu'au cours d'une étape 206, le noeud récepteur N_{if,jf,kf,lf} reçoit la requête, il se reconnaît comme destinataire de cette requête lorsque que tous les compteurs Ci, Cj, Ck et Cl sont à des valeurs égales à celles de l'adresse géographique cible (i_{f}, j_{f}, k_{f}, l_{f}) indiquée dans la requête.

Lors d'une étape 208 suivante, le noeud récepteur analyse le contenu de la requête dont il est le destinataire. Au cours de cette étape également, conformément au mode unicast, il prépare un message comportant une réponse à cette requête : par exemple une réponse incluant son adresse MAC si la requête porte sur ce point. Si la réponse est destinée au noeud émetteur de la requête, les compteurs Ci, Cj, Ck et Cl sont initialisés à Ci(f) = i_{f}, Cj(f) = j_{f}, Ck(f) = k_{f} et Cl(f) = l_{f} et la réponse est transmise, avec un champ reprenant la nouvelle adresse géographique cible (iₑ, jₑ, kₑ, lₑ), vers le noeud émetteur à travers le réseau d'interconnexion géographique selon le même principe d'incrémentation et/ou décrémentation que pour la requête.

Enfin, lors d'une dernière étape 210, le noeud émetteur Nᵢₑ,ⱼₑ,ₖₑ,ₗₑ reçoit la réponse. Il se reconnaît comme destinataire de cette réponse parce que tous les compteurs Ci, Cj, Ck et Cl sont à des valeurs égales à celles de l'adresse géographique cible (iₑ, jₑ, kₑ, lₑ) indiquée dans la réponse.

On notera que selon cette première application et selon un autre mode de réalisation possible, les compteurs Ci, Cj, Ck et Cl pourraient être initialisés à la différence entre l'adresse de destination et l'adresse d'émission, soit Ci(e) = i_{f} - iₑ, Cj(e) = j_{f} - jₑ, Ck(e) = k_{f} - kₑ et CI(e) = I_{f} - lₑ, et les circuits logiques programmables 21, 31ᵢ, ..., 31ₖ, ..., 31_{K} de chaque baie informatique B_{i,j} pourraient être munis des moyens d'incrémentation et/ou décrémentation suivants :
- dans le circuit programmable 21 du module RMM_{i,j} de gestion de la baie Bⱼ :
   - lorsque la requête sort par le deuxième port 23 : Cj est décrémenté d'une unité,
   - lorsque la requête sort par le troisième port 24 (pour toutes les baies B_{i,1}) : Ci est décrémenté d'une unité,
   - lorsque la requête sort par le quatrième port 25 (pour toutes les baies B_{i,1}) : Ck est décrémenté d'une unité, et
   - lorsque la requête sort par le premier port 22 : si j=1, Ci est incrémenté d'une unité, si j>1, Cj est incrémenté d'une unité.
- dans le circuit programmable 31ₖ du module CMM_{i,j,k} de gestion du châssis C_{i,j,k} :
   - lorsque la requête sort par le deuxième port 33ₖ : Ck est décrémenté d'une unité, et
   - lorsque la requête sort par le premier port 32ₖ : Ck est incrémenté d'une unité.

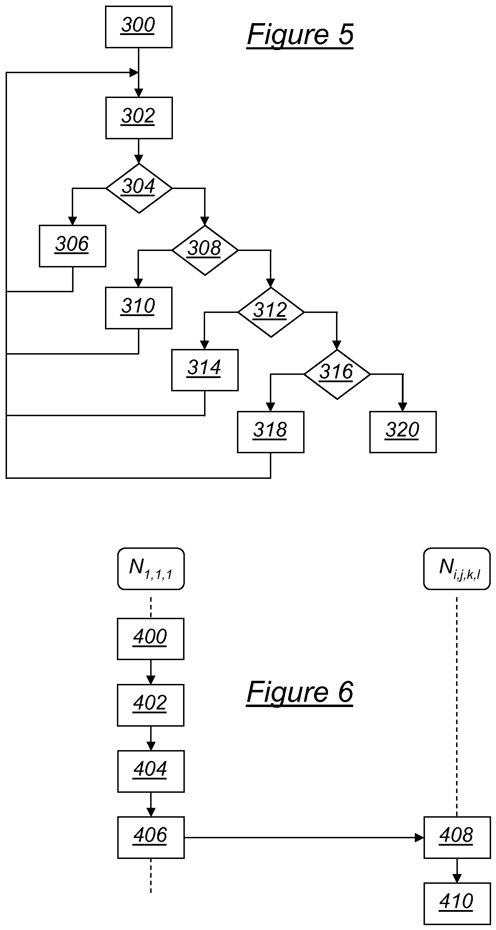

On notera aussi que les adresses MAC des noeuds de la grappe de serveurs peuvent être toutes collectées à partir d'un noeud collecteur, par exemple une origine géographique prédéterminée, selon un protocole conforme au mode de transmission en unicast indiqué dans cette première application. Dans ce cas, un programme spécifique doit explorer l'ensemble des noeuds de la grappe de serveurs, par exemple selon l'organigramme illustré sur la figure 5, pour transmettre une même requête successivement à tous les noeuds. La combinaison de cette exploration de l'ensemble des noeuds avec des transmissions successives en mode unicast sera qualifiée de transmission en mode « multi-unicast ». Ce mode multi-unicast se présente donc comme une alternative au mode broadcast, mais en ayant un avantage supplémentaire : celui de permettre à l'origine géographique d'attendre une réponse à chaque requête émise vers l'un quelconque des noeuds de l'ensemble exploré.

Conformément à une première étape 300 résultant d'une exécution de ce programme d'exploration, l'adresse géographique du noeud récepteur d'une requête est par exemple initialisée arbitrairement à i=1, j=1, k=1 et l=1, c'est-à-dire l'adresse du premier calculateur (l=1) du premier châssis (k=1) de la première baie (j=1) de la première rangée R1 (i=1), référencé N_{1,1,1,1}. Une origine géographique est également arbitrairement choisie. De façon pratique, une telle origine géographique est par exemple le circuit logique programmable d'un module de gestion de baie ou de châssis auquel cas ses coordonnées peuvent être exprimées plus simplement de façon restreinte dans le système de coordonnées incomplet (i, j, k). De préférence, il s'agit même du circuit logique programmable du module RMM_{1,1} de gestion de la première baie de la première rangée ou du module CMM_{1,1,1} de gestion du premier châssis de la première baie de la première rangée, dont les coordonnées peuvent être exprimées de façon restreinte sous la forme (1, 1, 1). L'origine géographique peut alors être référencée N_{1,1,1}.

Au cours de l'étape suivante 302, l'ensemble des étapes 200 à 210 est exécuté par l'origine géographique N_{1,1,1} sur la base d'une initialisation des compteurs à Ci(e) = 1, Cj(e) = 1, Ck(e) = 1 et CI(e) = 1, pour l'émission en unicast d'une requête et l'attente d'une réponse. La requête comporte un champ indiquant l'adresse géographique cible (i, j, k, l).

Ensuite, un test 304 est réalisé à réception d'une réponse à la requête émise. Si la réponse inclut une réponse valide (par exemple l'adresse MAC) du noeud récepteur d'adresse (i, j, k, l), cette dernière est enregistrée par l'origine géographique. On passe alors à une étape 306 lors de laquelle l'indice I est incrémenté d'une unité puis de nouveau à l'étape 302. Si, au contraire, la réponse est un message d'erreur (i.e. l'adresse géographique n'est pas accessible), on passe à une nouvelle étape 308 de test.

Au cours de l'étape 308, on teste la valeur de l'indice I. Si celui-ci est strictement supérieur à 1, alors on passe à une étape 310 lors de laquelle l'indice I est réinitialisé à 1 et l'indice k incrémenté d'une unité, puis on passe de nouveau à l'étape 302. Si, au contraire, l'indice I vaut 1, on passe à une nouvelle étape 312 de test.

Au cours de l'étape 312, on teste la valeur de l'indice k. Si celui-ci est strictement supérieur à 1, alors on passe à une étape 314 lors de laquelle l'indice k est réinitialisé à 1 et l'indice j incrémenté d'une unité, puis on passe de nouveau à l'étape 302. Si, au contraire, l'indice k vaut 1, on passe à une nouvelle étape 316 de test.

Au cours de l'étape 316, on teste la valeur de l'indice j. Si celui-ci est strictement supérieur à 1, alors on passe à une étape 318 lors de laquelle l'indice j est réinitialisé à 1 et l'indice i incrémenté d'une unité, puis on passe de nouveau à l'étape 302. Si, au contraire, l'indice j vaut 1, on passe à une dernière étape 320 de fin d'exploration.

La totalité des noeuds accessibles par le réseau d'interconnexion géographique depuis l'origine géographique est ainsi explorée. Dans cette application de collecte des adresses MAC, une liste des relations entre adresses géographiques et adresses matérielle MAC est ainsi dressée. Comme, en outre, la topologie du réseau d'interconnexion géographique est connue à l'avance puisqu'elle correspond à l'installation physique de la grappe de serveurs 12, une autre liste de liens entre adresses géographiques et adresses logiques IP peut être préalablement établie. En croisant ces deux listes, il devient possible d'associer automatiquement chaque adresse logique IP à une adresse MAC. Ainsi, la grappe de serveur incluant généralement un serveur DHCP de gestion des adresses IP, cette association des adresses MAC et IP peut être transmise au serveur DHCP.

A l'aide de ces deux listes, si le noeud choisi comme origine géographique est configuré correctement pour être accessible à distance via le réseau d'administration Ethernet, l'ensemble des étapes décrites précédemment peut être exécuté à distance. En outre, dans le cadre d'une administration plus générale de modules de contrôle à travers le réseau Ethernet, ces modules de contrôle faisant partie des noeuds de la grappe de serveurs 12, l'un de ces modules sollicité à l'aide de son adresse IP peut facilement se localiser géographiquement grâce à ce système d'adresses géographiques.

Une variante de la première application est l'envoi d'une commande à distance d'un noeud émetteur vers un noeud récepteur, notamment pour émuler un panneau de contrôle de ce noeud récepteur, ce noeud pouvant être l'un des noeuds N_{i,j,k,l}, l'un des modules CMM_{i,j,k} de gestion de châssis ou l'un des modules RMM_{i,j} de gestion de baie informatique de la grappe de serveurs 12. Par exemple, le circuit programmable 31ₖ de l'un quelconque des modules de gestion de châssis CMM_{i,j,k} est directement raccordé au panneau de contrôle du châssis C_{i,j,k} de manière à agir sur des fonctions de commande de ce dernier qui généralement ne sont accessibles que par le réseau d'administration Ethernet ou manuellement, avec l'intervention locale d'un opérateur, à l'aide de commandes par interrupteur, bouton câblé, port de communication série (généralement appelé « port COM ») ou autres. Il peut par exemple s'agir de fonctions de redémarrage, de restauration de fonctionnement, d'initialisation (telle qu'une remise en situation de sortie d'usine, un redémarrage de logiciel embarqué, ou une réinitialisation de certains paramètres à des valeurs de configuration par défaut, ...), de maintenance ou autre. Dès réception via le réseau d'interconnexion géographique et selon la méthode précitée d'une telle commande par le circuit programmable 31ₖ, celui-ci transfère la commande vers les récepteurs appropriés du panneau de contrôle du châssis C_{i,j,k} pour exécuter la fonction de redémarrage, restauration de fonctionnement, initialisation, maintenance ou autre identifiée dans la commande.

En particulier, pour émuler le port COM, dès qu'une connexion vers celui-ci est ouverte, la commande distante est envoyée en mode unicast de façon régulière. Cette commande contient des données d'entrée vers le module concerné. S'il n'y a pas de données à transmettre, une trame vide peut-être émise. En réponse à la commande, des données de sortie du module concerné peuvent être à leur tour renvoyées.

De même, une autre variante de la première application est l'envoi d'un signal de contrôle à distance d'un noeud émetteur vers un noeud récepteur, notamment pour émuler un panneau de contrôle de ce noeud émetteur, ce noeud pouvant être l'un des noeuds N_{i,j,k,l}, l'un des modules CMM_{i,j,k} de gestion de châssis ou l'un des modules RMM_{i,j} de gestion de baie informatique de la grappe de serveurs 12. Par exemple, le circuit programmable 31ₖ de l'un quelconque des modules de gestion de châssis CMM_{i,j,k} est directement raccordé au panneau de contrôle du châssis C_{i,j,k} de manière à agir sur des fonctions de contrôle de ce dernier qui généralement ne sont accessibles que par le réseau d'administration Ethernet ou localement à l'aide de diodes ou autres, avec l'intervention locale d'un opérateur. Il peut par exemple s'agir de fonctions de signalisation, d'alarme ou autre. Dès détection par le panneau de configuration du châssis C_{i,j,k} d'un quelconque évènement justifiant l'émission d'un signal de contrôle, celui-ci est transmis au circuit programmable 31ₖ, qui transfère l'information au noeud récepteur (par exemple un serveur d'administration) via le réseau d'interconnexion géographique selon la méthode décrite précédemment.

On notera que d'une façon générale, la première application, et ses variantes détaillées ci-dessus, concerne la transmission en mode unicast de messages depuis un émetteur vers un unique récepteur ou éventuellement la transmission en mode multi-unicast. C'est notamment la raison pour laquelle il est choisi d'initialiser les compteurs à l'adresse d'émission, d'insérer l'adresse de réception dans un champ prévu à cet effet dans le message émis et de procéder aux incrémentations/décrémentations comme indiqué dans cette première application.

Une deuxième application consiste à attribuer automatiquement, à chaque noeud de la grappe de serveurs 12, une adresse géographique directement corrélée à la configuration spatiale du réseau d'interconnexion géographique grâce à la transmission à tous ces noeuds d'une requête d'attribution d'adresses géographiques à partir d'un noeud choisi comme origine géographique, par exemple le noeud N_{1,1,1}.

Selon cette deuxième application et selon un mode de réalisation possible, la requête d'attribution d'adresses géographiques est transmise en mode multi-unicast, conformément à l'exemple qui a été donné précédemment pour la collecte des adresses MAC. Les étapes 300 à 320 sont donc exécutées, incluant une exécution des étapes 200 à 210 à chaque itération de l'étape 302, sur la base d'une initialisation des compteurs Ci, Cj et Ck à l'adresse d'origine du noeud choisi comme origine géographique émetteur de la requête, et du compteur Cl, s'il est utilisé, à 1 par exemple. Les circuits logiques programmables 21, 31₁, ..., 31ₖ, ..., 31_{K} de chaque baie informatique B_{i,j} sont en outre munis de moyens d'incrémentation et/ou décrémentation des compteurs en fonction du port d'échange bidirectionnel de données par lequel la requête est émise dans le circuit logique programmable concerné. Les règles d'incrémentation et/ou décrémentation sont les mêmes que celles décrites pour la première application.

Cette deuxième application se distingue de la collecte des adresses MAC principalement en ce que, lors de l'étape 202, la requête générée par l'origine géographique N_{1,1,1} comporte un en-tête l'identifiant spécifiquement en tant que requête d'attribution d'adresses géographiques.

Enfin, selon cette deuxième application également, la requête transmise comporte un champ dans lequel est indiquée l'adresse géographique du noeud récepteur, cette adresse variant à chaque itération du procédé de collecte mettant en oeuvre les étapes 300 à 320.

Lorsqu'au cours d'une itération quelconque de l'étape 206, l'un quelconque des noeuds N_{i,j,k,l} correspondant reçoit la requête d'attribution d'adresses géographiques et se reconnaît comme destinataire (i.e. les compteurs sont à des valeurs égales à celles de l'adresse géographique cible indiquée dans la requête), il extrait les valeurs de compteurs Ci, Cj, Ck et Cl ou l'adresse géographique cible (ce qui revient au même) de cette requête. Plus précisément, pour le noeud N_{i,j,k,l}, Ci=i, Cj=j, Ck=k et Cl=l. L'adresse géographique (i, j, k, l) est alors attribuée au noeud N_{i,j,k,l} qui l'enregistre par exemple dans une mémoire locale. Par ailleurs, conformément aux étapes 208 et 210 précédemment décrites, il renvoie un accusé réception ou une réponse de validation à l'origine géographique. Une adresse géographique est ainsi attribuée à chaque noeud accessible de la grappe de serveurs 12.

Une troisième application, supposant que la deuxième application a été exécutée pour l'attribution d'une adresse géographique à chaque noeud, consiste à vérifier l'intégrité du réseau d'interconnexion géographique et des adresses géographiques attribuées grâce à la transmission d'une requête de vérification à partir d'un noeud administrateur choisi pour effectuer cette vérification. Ce noeud administrateur peut être le noeud N_{1,1,1} choisi comme origine géographique de la deuxième application.

Selon cette troisième application et selon un mode de réalisation possible, la requête de vérification est transmise en mode multi-unicast, conformément aux exemples qui ont été donnés précédemment pour la collecte des adresses MAC et pour l'attribution des adresses géographiques. Les étapes 300 à 320 sont donc exécutées, incluant une exécution des étapes 200 à 210 à chaque itération de l'étape 302, sur la base d'une initialisation des compteurs Ci, Cj et Ck à l'adresse d'origine du noeud choisi comme origine géographique émetteur de la requête de vérification, et du compteur Cl, s'il est utilisé, à 1 par exemple. Les circuits logiques programmables 21, 31₁, ..., 31ₖ, ..., 31_{K} de chaque baie informatique B_{i,j} sont en outre munis de moyens d'incrémentation et/ou décrémentation des compteurs en fonction du port d'échange bidirectionnel de données par lequel la requête est émise dans le circuit logique programmable concerné. Les règles d'incrémentation et/ou décrémentation sont les mêmes que celles décrites pour les première et deuxième applications.

Cette troisième application se distingue de la deuxième principalement en ce que, lors de l'étape 202, la requête générée par l'origine géographique N_{1,1,1} comporte un en-tête l'identifiant spécifiquement en tant que requête de vérification.

Enfin, selon cette troisième application également, la requête transmise comporte un champ dans lequel est indiquée l'adresse géographique du noeud récepteur, cette adresse variant à chaque itération du procédé de collecte mettant en oeuvre les étapes 300 à 320.

Lorsqu'au cours d'une itération quelconque de l'étape 206, l'un quelconque des noeuds N_{i,j,k,l} correspondant reçoit la requête de vérification d'adresses géographiques et se reconnaît comme destinataire (i.e. les compteurs sont à des valeurs égales à celles de l'adresse géographique cible indiquée dans la requête), il extrait les valeurs de compteurs Ci, Cj, Ck et Cl ou l'adresse géographique cible (ce qui revient au même) de cette requête. Il compare ensuite ces valeurs à son adresse géographique (i, j, k, l) enregistrée localement.

Par ailleurs, conformément aux étapes 208 et 210 précédemment décrites, si les valeurs correspondent, il renvoie un message de validation incluant son adresse géographique à l'origine géographique, sinon il peut renvoyer un message d'erreur. De façon optionnelle, le message de validation peut inclure l'adresse MAC de ce noeud de sorte qu'une relation puisse être établie entre l'adresse MAC et l'adresse géographique.

En particulier, lors des itérations successives des étapes 210, l'origine géographique collecte les messages renvoyés par le réseau d'interconnexion géographique suite à l'émission de sa requête de vérification. En fonction des réponses reçues, il devient très simple de déterminer si des branches (i.e. des segments de transmission) du réseau d'interconnexion géographique dysfonctionnent ou si des incohérences dans l'enregistrement des adresses géographiques existent : en particulier, un dysfonctionnement du réseau d'interconnexion géographique se traduit par l'absence de réponse du noeud en aval duquel un segment de transmission dysfonctionne et de tous les autres noeuds situés en aval de ce noeud ; une incohérence est détectée par la réception d'un message d'indication du dysfonctionnement de la part du noeud situé en amont du segment de transmission concerné. Si les messages de validation collectés incluent les adresses MAC des noeuds qui les ont envoyés, il devient en outre possible d'associer automatiquement chaque adresse géographique de chaque noeud de la grappe de serveurs 12 à une adresse MAC et d'enregistrer cette association.

On notera que, d'une façon générale, les deuxième et troisième applications détaillées ci-dessus, de même que la collecte spécifique des adresses MAC, concernent la diffusion d'une requête depuis une origine géographique vers l'ensemble des autres noeuds de la grappe de serveurs 12. C'est notamment la raison pour laquelle il est choisi une transmission de la requête en mode multi-unicast. En variante, il pourrait être choisi de transmettre cette requête en mode broadcast, mais cette variante est *a priori* moins avantageuse parce qu'elle ne prévoit pas en règle générale de retourner une réponse sur réception d'une requête. Cependant un tel mode de transmission de messages en mode broadcast peut être envisagé dans certains cas, notamment après avoir attribué les adresses géographiques et vérifié l'intégrité du réseau d'interconnexion géographique.

Une quatrième application, qualifiée d'application broadcast, consiste donc d'une façon générale à diffuser un message en mode broadcast à l'attention de tous les noeuds de la grappe de serveurs depuis une origine géographique, par exemple le noeud N_{1,1,1}. Selon cette quatrième application broadcast et selon un mode de réalisation possible, les compteurs Ci, Cj et Ck sont initialisés à l'adresse (1,1,1) du noeud choisi comme origine géographique émetteur du message, le compteur Cl, s'il est utilisé, est par exemple initialisé à 1 et les circuits logiques programmables 21, 31₁, ..., 31ₖ, ..., 31_{K} de chaque baie informatique B_{i,j} sont munis de moyens d'incrémentation et/ou décrémentation des compteurs en fonction du port d'échange bidirectionnel de données par lequel la requête est émise dans le circuit logique programmable concerné.

Plus précisément, dans le circuit programmable 21 du module RMM_{i,j} de gestion de la baie B_{i,j} :
- lorsque la requête sort par le deuxième port 23 : Cj est incrémenté d'une unité,
- lorsque la requête sort par le troisième port 24 (pour toutes les baies B_{i,1}) : Ci est incrémenté d'une unité,
- lorsque la requête sort par le quatrième port 25 (pour toutes les baies B_{i,1}) : Ck est incrémenté d'une unité, et
- lorsque la requête sort par le premier port 22 (ce qui représente le sens contraire de diffusion d'amont en aval défini précédemment) : si j=1, Ci est décrémenté d'une unité, si j>1, Cj est décrémenté d'une unité.

Plus précisément également, dans le circuit programmable 31ₖ du module CMM_{i,j,k} de gestion du châssis C_{i,j,k} :
- lorsque la requête sort par le deuxième port 33ₖ : Ck est incrémenté d'une unité, et
- lorsque la requête sort par le premier port 32ₖ (ce qui représente le sens contraire de diffusion d'amont en aval défini précédemment) : Ck est décrémenté d'une unité.

On remarque que la règle d'incrémentation et/ou décrémentation choisie ci-dessus est d'incrémenter les compteurs d'au moins une unité (une unité par défaut et plus d'une unité localement lorsque des baies non connectées au réseau d'interconnexion géographique s'interposent dans la grappe de serveurs 12) d'amont en aval dans le sens de diffusion défini précédemment. Ce choix est arbitraire et il est facile d'en faire un autre en adaptant alors le mode de réalisation.

Ainsi, comme illustré sur la figure 6 et selon le mode de réalisation précité, un procédé broadcast de diffusion d'un message à partir d'une origine géographique peut comporter les étapes suivantes.

Au cours d'une première étape d'initialisation 400, une origine géographique est sélectionnée parmi les noeuds de la grappe de serveurs 12. Cette origine géographique est par exemple le noeud N_{1,1,1}.

Ensuite, lors d'une deuxième étape d'initialisation 402, les compteurs Ci, Cj, Ck et Cl sont initialisés à Ci(e) = Cj(e) = Ck(e) = CI(e) = 1.

Lors d'une étape 404, un message à diffuser est généré par l'origine géographique N_{1,1,1}. Ce message inclut les compteurs Ci, Cj, Ck et Cl à leurs valeurs initiales.

L'étape 406 suivante lance, à partir de l'origine géographique N_{1,1,1}, la diffusion de ce message dans toute la grappe de serveurs 12 à travers le réseau d'interconnexion géographique. Conformément aux règles d'incrémentation et/ou décrémentation précitées et à partir du noeud N_{1,1,1} choisi comme origine, chaque fois que la requête est dirigée vers un segment de transmission de premier niveau dans le sens de diffusion d'amont en aval, son compteur Ci est incrémenté d'une unité (ou plus si une baie non raccordée au réseau d'interconnexion géographique s'interpose dans la première direction), chaque fois que la requête est dirigée vers un segment de transmission de deuxième niveau dans le sens de diffusion d'amont en aval, son compteur Cj est incrémenté d'une unité (ou plus si une baie non raccordée au réseau d'interconnexion géographique s'interpose dans la deuxième direction), chaque fois que la requête est dirigée vers un segment de transmission de troisième niveau dans le sens de diffusion d'amont en aval, son compteur Ck est incrémenté d'une unité et le compteur Cl est incrémenté en fonction de la situation de la requête dans le châssis considéré.

Au cours d'une étape 408, l'un quelconque des noeuds N_{i,j,k,l} reçoit le message. Cette étape de réception peut être suivie d'une action 410 définie en fonction de la nature du message diffusé.

Par ailleurs, étant donné que dans les modes de réalisation envisagés précédemment les règles d'incrémentations/décrémentations sont les mêmes en modes unicast, multi-unicast et broadcast, les messages émis selon ces trois modes peuvent présenter le même format, la distinction entre le mode unicast ou multi-unicast et le mode broadcast pouvant se faire simplement sur l'adresse géographique cible insérée dans les messages : cette dernière peut en effet prendre une valeur prédéterminée reconnue comme inaccessible pour identifier le mode broadcast (par exemple, on peut imposer que les valeurs maximales pour i, j, k et I soient réservées au mode broadcast) : ainsi, à l'étape de réception 408, le message est reconnu par l'un quelconque des noeuds récepteurs comme ayant été émis en mode broadcast grâce à la valeur spécifique que prend l'adresse géographique cible.

Il apparaît clairement qu'un procédé d'échange de données tel que celui décrit précédemment selon différents modes de réalisation et applications possibles multiplie les possibilités d'échanges de données, notamment de données d'administration, de localisation géographique, de commande ou de contrôle, à travers le réseau d'interconnexion géographique. En fournissant les données avec une information relative aux segments de transmission du réseau d'interconnexion géographique traversés, ce dernier devient en particulier apte à assurer une maintenance du réseau d'administration Ethernet en cas de défaillance de ce dernier. Réciproquement, le réseau d'administration Ethernet est lui aussi apte à assurer une maintenance du réseau d'interconnexion géographique en cas de défaillance de ce dernier. On peut alors parler de maintenance coopérative entre ces deux réseaux : en d'autres termes, on dispose ainsi de deux réseaux de transmission de natures différentes pour la transmission de données de service, l'un pouvant venir au secours de l'autre en cas de problème. La probabilité que ces deux réseaux soient défaillants en même temps est justement d'autant plus faible qu'ils sont de natures différentes.

On notera par ailleurs que l'invention n'est pas limitée aux modes de réalisation et aux applications décrits précédemment. Il apparaîtra en effet à l'homme de l'art que diverses modifications peuvent être apportées aux modes de réalisation décrits ci-dessus, à la lumière de l'enseignement qui vient de lui être divulgué. Notamment, dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé d'échange de données entre noeuds d'une grappe de serveurs (12) comportant une pluralité de noeuds (N_{i,j,k,l}) interconnectés entre eux par un réseau d'interconnexion géographique comportant une pluralité de segments de transmission (10_{i-1/i}, 20_{i,j-1/j}, 30_{k-1/k}, 40ₖ) reliant les noeuds entre eux selon un nombre limité prédéterminé de directions de liaisons différentes respectivement associées à plusieurs coordonnées différentes d'un système de coordonnées du réseau d'interconnexion géographique, chaque segment de transmission du réseau d'interconnexion géographique appartenant ainsi à l'une des différentes directions de liaison et le système de coordonnées étant ainsi défini de telle sorte que chaque coordonnée du système de coordonnées est associée à l'une des différentes directions de liaisons, le procédé comportant :
- l'émission (104) par un noeud (Nₑ), dit noeud émetteur, de données destinées à au moins un autre noeud (Nᵣ), dit noeud récepteur,
- la transmission (106) de ces données à l'aide du réseau d'interconnexion géographique,
- la réception (108) des données par chaque noeud récepteur (Nᵣ),
- la fourniture des données à chaque noeud récepteur (Nᵣ) avec une information relative aux segments de transmission du réseau d'interconnexion géographique traversés entre le noeud émetteur (Nₑ) et ce noeud récepteur (Nᵣ) lors de leur transmission,
**caractérisé en ce que** cette information est plus précisément définie dans le système de coordonnées du réseau d'interconnexion géographique à l'aide de plusieurs compteurs, à raison d'un compteur par direction de liaison, chaque compteur étant incrémenté ou décrémenté dès qu'un segment de transmission liant deux noeuds dans la direction de liaison correspondant à ce compteur est traversé par les données lors de leur transmission depuis le noeud émetteur vers ledit au moins un noeud récepteur.

2. Procédé d'échange de données selon la revendication 1, dans lequel une valeur d'incrément ou de décrément de compteur est associée à chaque segment de transmission et définie en fonction de la présence ou pas d'au moins un noeud supplémentaire de la grappe de serveur (12) non connecté au réseau d'interconnexion géographique mais disposé géographiquement entre les deux noeuds interconnectés par ce segment de transmission.

3. Procédé d'échange de données selon la revendication 1 ou 2 pour l'attribution d'une adresse géographique à chaque noeud, comportant :
- la sélection (300) d'une origine géographique (N_{1,1,1}) choisie parmi les noeuds (N_{i,j,k,l}) de la grappe de serveurs (12),
- l'attribution (300) d'une adresse d'origine à cette origine géographique (N_{1,1,1}), et l'initialisation de chaque compteur à au moins une valeur déterminée à partir de l'adresse d'origine attribuée,
- la transmission (302, 204) par l'origine géographique (N_{1,1,1}), à tous les autres noeuds (N_{i,j,k,l}) de la grappe de serveurs (12), dits noeuds récepteurs, d'un message identifié comme requérant l'attribution d'une adresse géographique et incluant chaque compteur, cette transmission comportant l'incrémentation ou la décrémentation de chaque compteur dès qu'un segment de transmission correspondant est traversé par le message,
- l'attribution (302, 206), à chaque noeud récepteur (N_{i,j,k,l}), d'une adresse géographique dans la grappe de serveurs (12) déterminée à partir de la valeur prise par chaque compteur lorsque le message est reçu par ce noeud récepteur,
- l'enregistrement (302, 206) de l'adresse géographique de chaque noeud (N_{i,j,k,l}) dans des moyens de stockage d'adresses de la grappe de serveur.

4. Procédé d'échange de données selon la revendication 3, dans lequel l'adresse géographique attribuée à l'un quelconque des noeuds (N_{i,j,k,l}) de la grappe de serveurs (12) est enregistrée (302, 206) localement par ce noeud dans des moyens de stockage qu'il comporte.

5. Procédé d'échange de données selon la revendication 3 ou 4 pour une vérification de l'intégrité du réseau d'interconnexion géographique et des adresses géographiques attribuées, comportant :
- l'initialisation (300) de chaque compteur à au moins une valeur déterminée à partir de l'adresse géographique d'un noeud administrateur (N_{1,1,1}) chargé de vérifier ladite intégrité,
- la transmission (302, 204) par ce noeud administrateur (N_{1,1,1}), à tous les autres noeuds (N_{i,j,k,l}) de la grappe de serveurs (12), dits noeuds récepteurs, d'un message identifié comme requérant une vérification de ladite intégrité et incluant chaque compteur, cette transmission comportant l'incrémentation ou la décrémentation de chaque compteur dès qu'un segment de transmission correspondant est traversé par le message,
- le renvoi (302, 208) au noeud administrateur (N_{1,1,1}), par au moins une partie des noeuds récepteurs (N_{i,j,k,l}), de messages de validation ou d'erreur en réponse au message de requête,
- la détection (302, 210) d'un dysfonctionnement éventuel du réseau d'interconnexion géographique ou d'une incohérence éventuelle dans l'attribution des adresses géographiques sur la base des messages renvoyés au noeud administrateur (N_{1,1,1}).

6. Procédé d'échange de données selon l'une quelconque des revendications 3 à 5, dans lequel :
- à l'occasion de l'émission (104 ; 204), par le noeud émetteur (Nₑ), de données destinées au noeud récepteur (Nᵣ), chaque compteur est initialisé à au moins une valeur déterminée à partir de l'adresse géographique du noeud émetteur (Nₑ),
- lors de la transmission (106 ; 204) de ces données à l'aide du réseau d'interconnexion géographique, chaque compteur est incrémenté ou décrémenté dès qu'un segment de transmission correspondant est traversé par un message comportant ces données et les données sont en outre transmises avec au moins une valeur correspondant à l'adresse géographique du noeud récepteur (Nᵣ),
- les données sont considérées comme ayant atteint (108 ; 206) le noeud récepteur (Nᵣ) lorsque la valeur des compteurs est égale à la valeur d'adresse géographique du noeud récepteur (Nᵣ) transmise avec les données.

7. Procédé d'échange de données selon la revendication 6, dans lequel les données transmises par le noeud émetteur (Nₑ) vers le noeud récepteur (Nᵣ) comportent l'un des éléments de l'ensemble constitué :
- d'une requête d'attribution d'adresse géographique au noeud récepteur (Nᵣ), le noeud émetteur (Nₑ) de cette requête étant une origine géographique (N_{1,1,1}) choisie parmi les noeuds (N_{i,j,k,l}) de la grappe de serveurs (12),
- d'une requête de vérification d'adresse géographique du noeud récepteur (Nᵣ), le noeud émetteur (Nₑ) de cette requête étant une origine géographique (N_{1,1,1}) choisie parmi les noeuds (N_{i,j,k,l}) de la grappe de serveurs (12),
- d'une requête d'adresse MAC, le noeud émetteur (Nₑ) de cette requête étant un noeud administrateur des adresses MAC de tous les noeuds de la grappe de serveurs (12),
- d'une réponse à une requête d'adresse MAC,
- d'une commande d'émulation d'une fonction de commande d'un panneau de contrôle du noeud récepteur (Nᵣ), notamment d'une fonction de redémarrage, de restauration de fonctionnement, d'initialisation ou de maintenance, et
- d'une commande d'émulation d'une fonction de contrôle d'un panneau de contrôle du noeud récepteur (Nᵣ), notamment d'une fonction de signalisation ou d'alarme.

8. Grappe de serveurs (12) comportant une pluralité de noeuds (N_{i,j,k,l}) interconnectés entre eux par un réseau d'interconnexion géographique comportant une pluralité de segments de transmission (10_{i-1/i}, 20_{i,j-1/j}, 30_{k-1/k}, 40ₖ) reliant les noeuds entre eux selon un nombre limité prédéterminé de directions de liaisons différentes respectivement associées à plusieurs coordonnées différentes d'un système de coordonnées du réseau d'interconnexion géographique, chaque segment de transmission du réseau d'interconnexion géographique appartenant ainsi à l'une des différentes directions de liaison et le système de coordonnées étant ainsi défini de telle sorte que chaque coordonnée du système de coordonnées est associée à l'une des différentes directions de liaisons, la grappe de serveurs comportant :
- des moyens de transmission, à l'aide du réseau d'interconnexion géographique, de données émises par un noeud (Nₑ), dit noeud émetteur, et destinées à au moins un autre noeud (Nᵣ), dit noeud récepteur,
- des moyens (21, 31₁, ..., 31ₖ, ..., 31_{K}) de génération d'une information relative aux segments de transmission du réseau d'interconnexion géographique traversés entre ce noeud émetteur (Nₑ) et ce noeud récepteur (Nᵣ) lors de leur transmission (106), cette information comportant au moins un compteur incrémenté ou décrémenté dès qu'un segment de transmission correspondant est traversé par les données lors de leur transmission, et
- des moyens de fourniture, audit au moins un noeud récepteur (Nᵣ), de cette information avec les données transmises,
**caractérisée en ce que** les moyens (21, 31₁, ..., 31ₖ, ..., 31_{K}) de génération de cette information sont plus précisément conçus pour la définir dans le système de coordonnées du réseau d'interconnexion géographique à l'aide de plusieurs compteurs, à raison d'un compteur par direction de liaison, chaque compteur étant incrémenté ou décrémenté dès qu'un segment de transmission liant deux noeuds dans la direction de liaison correspondant à ce compteur est traversé par les données lors de leur transmission depuis le noeud émetteur vers ledit au moins un noeud récepteur.

9. Grappe de serveurs (12) selon la revendication 8, dans laquelle :
- les noeuds (N_{i,j,k,l}) sont en outre interconnectés entre eux par un réseau d'administration adapté pour la transmission de données de service selon le protocole IP et comportent chacun une interface réseau d'adresse MAC prédéfinie,
- des moyens d'adressage (N_{1,1,1}, 21, 31₁, ..., 31ₖ, ..., 31_{K}) sont prévus pour l'attribution d'une adresse géographique à chaque noeud de la grappe de serveur sur la base de l'information relative aux segments de transmission du réseau d'interconnexion géographique traversés entre un noeud choisi comme origine géographique et chaque noeud, et
- des moyens d'enregistrement sont prévus pour l'enregistrement et le stockage de l'adresse géographique attribuée à chaque noeud en association avec son adresse MAC.

10. Grappe de serveurs (12) selon la revendication 8 ou 9, dans laquelle :
- chaque noeud (N_{i,j,k,l}) est inclus dans un châssis (C_{i,j,k}), lui-même inclus dans une baie informatique (B_{i,j}), elle-même incluse dans une rangée (Ri) de baies informatiques, la grappe de serveur (12) comportant une pluralité de rangées (R1, ... Ri, ... RI) de baies informatiques,
- le réseau d'interconnexion géographique comporte une pluralité de segments d'interconnexion des rangées entre elles (10_{i-1/i}) selon une première direction, de segments d'interconnexion de baies informatiques d'une même rangée entre elles (20_{i,j-1/j}) selon une deuxième direction, de segments d'interconnexion de châssis d'une même baie informatique entre eux (30_{k-1/k}) selon une troisième direction et de segments d'interconnexion de noeuds d'un même châssis entre eux (40ₖ) selon une quatrième direction,
la grappe de serveurs (12) comportant des moyens d'échange de données entre le noeud émetteur (Nₑ) et chaque noeud récepteur (Nᵣ) conçus pour transmettre, avec ces données, au moins une information relative au nombre de segments d'interconnexion de rangées (10_{i-1/i}) traversés entre le noeud émetteur (Nₑ) et ce noeud récepteur (Nᵣ), au nombre de segments d'interconnexion de baies informatiques (20_{i-1/i}) traversés entre le noeud émetteur (Nₑ) et ce noeud récepteur (Nᵣ) et au nombre de segments d'interconnexion de châssis (30_{i-1/i}) traversés entre le noeud émetteur (Nₑ) et ce noeud récepteur (Nᵣ).

11. Grappe de serveurs (12) selon la revendication 10, dans laquelle, l'information relative aux segments de transmission (10_{i-1/i}, 20_{i,j-1/j}, 30_{k-1/k}, 40ₖ) traversés entre le noeud émetteur (Nₑ) et chaque noeud récepteur (Nᵣ) comportant au moins un champ d'indication du nombre de segments d'interconnexion de rangées (10_{i-1/i}) traversés entre le noeud émetteur (Nₑ) et ce noeud récepteur (Nᵣ), un champ d'indication du nombre de segments d'interconnexion de baies informatiques (20_{i-1/i}) traversés entre le noeud émetteur (Nₑ) et ce noeud récepteur (Nᵣ) et un champ d'indication du nombre de segments d'interconnexion de châssis (30_{i-1/i}) traversés entre le noeud émetteur (Nₑ) et ce noeud récepteur (Nᵣ), des moyens d'incrémentation ou de décrémentation (21, 31₁, ..., 31ₖ, ..., 31_{K}) sont prévus pour l'incrémentation ou la décrémentation de chacun de ces champs dès qu'un segment correspondant est traversé par un message incluant des données échangées entre le noeud émetteur (Nₑ) et ce noeud récepteur (Nᵣ).

12. Grappe de serveurs (12) selon l'une quelconque des revendications 8 à 11, comportant :
- un premier réseau d'administration générale interconnectant tous les noeuds (N_{i,j,k,l}) entre eux, et
- au moins un second réseau de gestion de données de calcul destinées à être échangées entre les noeuds, interconnectant au moins une partie des noeuds (N_{i,j,k,l}) entre eux,
dans laquelle ledit réseau d'interconnexion géographique est un réseau supplémentaire, distinct du réseau d'administration générale et du réseau de gestion de données de calcul, notamment un réseau mettant en oeuvre le protocole HDLC.

## Patentansprüche

1. Verfahren zum Austausch von Daten zwischen Knoten eines Server-Clusters (12), der eine Vielzahl von Knoten (N_{i,j,k,l}) umfasst, die untereinander durch ein Netz von geographischen Zwischenverbindungen zwischenverbunden sind, welches eine Vielzahl von Übertragungssegmenten (10_{i+1/i}, 20_{i,j-1/j}, 30_{k-1/k}, 40ₖ) umfasst, die die Knoten untereinander gemäß einer vorbestimmten begrenzten Anzahl unterschiedlicher Verbindungsrichtungen verbinden, die jeweils mehreren unterschiedlichen Koordinaten eines Koordinatensystems des geographischen Zwischenverbindungsnetzes zugeordnet sind, wobei jedes Übertragungssegment des geographischen Zwischenverbindungsnetzes somit zu einer der unterschiedlichen Übertragungsrichtungen gehört, und das Koordinatensystem somit derart definiert ist, dass jede Koordinate des Koordinatensystems einer der unterschiedlichen Verbindungsrichtungen zugeordnet ist, wobei das Verfahren umfasst:
- das Senden (104), durch einen Senderknoten genannten Knoten (Nₑ), von Daten, die für mindestens einen anderen, Empfängerknoten genannten Knoten (Nᵣ) gedacht sind,
- das Übertragen (106) dieser Daten mithilfe des geographischen Zwischenverbindungsnetzes,
- das Empfangen (108) der Daten durch jeden Empfängerknoten (Nᵣ),
- das Ausliefern der Daten an jeden Empfängerknoten (Nᵣ) mit einer Information, die sich auf die Übertragungssegmente des geographischen Zwischenverbindungsnetzes bezieht, die zwischen dem Senderknoten (Nₑ) und diesem Empfängerknoten (Nᵣ) bei ihrer Übertragung durchlaufen wurden,
**dadurch gekennzeichnet, dass** diese Information im Koordinatensystem des geographischen Zwischenverbindungsnetzes mithilfe von mehreren Zählern, einem Zähler pro Verbindungsrichtung, genauer definiert wird, wobei jeder Zähler inkrementiert oder dekrementiert wird, sobald ein Übertragungssegment, das zwei Knoten in der diesem Zähler entsprechenden Verbindungsrichtung verbindet, von den Daten bei ihrer Übertragung vom Senderknoten zu dem mindestens einen Empfängerknoten durchlaufen wird.

2. Datenaustauschverfahren nach Anspruch 1, wobei ein Zähler-Inkrement- oder Dekrementwert jedem Übertragungssegment zugeordnet und in Abhängigkeit vom Vorhandensein oder nicht von mindestens einem zusätzlichen Knoten des Server-Clusters (12) definiert wird, der nicht an das geographische Zwischenverbindungsnetz angeschlossen ist, aber geographisch zwischen den zwei Knoten angeordnet ist, die von diesem Übertragungssegment zwischenverbunden werden.

3. Datenaustauschverfahren nach Anspruch 1 oder 2 für das Zuweisen einer geographischen Adresse zu jedem Knoten, umfassend:
- das Auswählen (300) eines geographischen Ursprungs (N_{1,1,1}), der aus den Knoten (N_{i,j,k,l}) des Server-Clusters (12) gewählt ist,
- das Zuweisen (300) einer Ursprungsadresse zu diesem geographischen Ursprung (N_{1,1,1}), und das Initialisieren jedes Zählers mit mindestens einem Wert, der anhand der zugewiesenen Ursprungsadresse bestimmt wird,
- das Übertragen (302, 204), durch den geographischen Ursprung (N_{1,1,1}) an alle anderen Empfängerknoten genannten Knoten (N_{i,j,k,l}) des Server-Clusters (12), einer Nachricht, die so identifiziert wird, dass sie das Zuweisen einer geographischen Adresse anfordert, und die jeden Zähler einschließt, wobei diese Übertragung das Inkrementieren oder das Dekrementieren jedes Zählers umfasst, sobald ein entsprechendes Übertragungssegment von der Nachricht durchlaufen wird,
- das Zuweisen (302, 206), zu jedem Empfängerknoten (N_{i,j,k,l}), einer geographischen Adresse im Server-Cluster (12), die anhand des Werts bestimmt wird, der von jedem Zähler genommen wird, wenn die Nachricht von diesem Empfängerknoten empfangen wird,
- das Aufzeichnen (302, 206) der geographischen Adresse jedes Knotens (N_{i,j,k,l}) in Adressspeichermitteln des Server-Clusters.

4. Datenaustauschverfahren nach Anspruch 3, wobei die einem der Knoten (N_{i,j,k,l}) des Server-Clusters (12) zugewiesene geographische Adresse lokal von diesem Knoten in Speichermitteln aufgezeichnet wird (302, 206), die er umfasst.

5. Datenaustauschverfahren nach Anspruch 3 oder 4 für eine Verifizierung der Integrität des geographischen Zwischenverbindungsnetzes und der zugewiesenen geographischen Adressen, umfassend:
- das Initialisieren (300) jedes Zählers mit mindestens einem Wert, der anhand der geographischen Adresse eines Administratorknotens (N_{1,1,1}) bestimmt wird, welcher damit beauftragt ist, die Integrität zu verifizieren,
- das Übertragen (302, 204), durch diesen Administratorknoten (N_{1,1,1}) an alle die anderen Empfängerknoten genannten Knoten (N_{i,j,k,l}) des Server-Clusters (12), einer Nachricht, die so identifiziert wird, dass sie eine Verifizierung der Integrität anfordert, und die jeden Zähler einschließt, wobei diese Übertragung das Inkrementieren oder das Dekrementieren jedes Zählers umfasst, sobald ein entsprechendes Übertragungssegment von der Nachricht durchlaufen wird,
- das Zurückgeben (302, 208), durch mindestens einen Teil der Empfängerknoten (N_{i,j,k,l}) an den Administratorknoten (N_{1,1,1}), von Validierungs- oder Fehlernachrichten in Antwort auf die Anfragenachricht,
- das Erkennen (302, 210) einer eventuellen Störung des geographischen Zwischenverbindungsnetzes oder einer eventuellen Inkohärenz in der Zuweisung der geographischen Adressen auf der Basis der an den Administratorknoten (N_{1,1,1}) zurückgegebenen Nachrichten.

6. Datenaustauschverfahren nach einem der Ansprüche 3 bis 5, wobei:
- anlässlich des Sendens (104; 204), durch den Senderknoten (Nₑ), von Daten, die für den Empfängerknoten (Nᵣ) gedacht sind, jeder Zähler mit mindestens einem Wert initialisiert wird, der anhand der geographischen Adresse des Senderknotens (Nₑ) bestimmt wird,
- beim Übertragen (106; 204) dieser Daten mithilfe des geographischen Zwischenverbindungsnetzes jeder Zähler inkrementiert oder dekrementiert wird, sobald ein entsprechendes Übertragungssegment von einer Nachricht durchlaufen wird, die diese Daten umfasst, und die Daten weiter mit mindestens einem Wert übertragen werden, der der geographischen Adresse des Empfängerknotens (Nᵣ) entspricht,
- die Daten als am Empfängerknoten (Nᵣ) angekommen (108; 206) angesehen werden, wenn der Wert der Zähler gleich dem geographischen Adresswert des Empfängerknotens (Nᵣ) ist, der mit den Daten übertragen wird.

7. Datenaustauschverfahren nach Anspruch 6, wobei die durch den Senderknoten (Nₑ) zum Empfängerknoten (Nᵣ) übertragenen Daten eines der Elemente aus dem Satz umfassen, der besteht:
- aus einer Anfrage um Zuweisung einer geographischen Adresse an den Empfängerknoten (Nᵣ), wobei der Senderknoten (Nₑ) dieser Anfrage ein geographischer Ursprung (N_{1,1,1}) ist, der aus den Knoten (N_{i,j,k,l}) des Server-Clusters (12) gewählt ist,
- aus einer Anfrage um Verifizierung einer geographischen Adresse des Empfängerknotens (Nᵣ), wobei der Senderknoten (Nₑ) dieser Anfrage ein geographischer Ursprung (N_{1,1,1}) ist, der aus den Knoten (N_{i,j,k,l}) des Server-Clusters (12) gewählt ist,
- aus einer MAC-Adressanfrage, wobei der Senderknoten (Nₑ) dieser Anfrage ein Administratorknoten der MAC-Adressen aller der Knoten des Server-Clusters (12) ist,
- aus einer Antwort auf eine MAC-Adressanfrage,
- aus einem Befehl zur Emulation einer Befehlsfunktion eines Steuerfeldes des Empfängerknotens (Nᵣ), insbesondere einer Neustart-, Betriebswiederherstellungs-, Initialisierungs- oder Wartungsfunktion, und
- aus einem Befehl zur Emulation einer Steuerfunktion eines Steuerfeldes des Empfängerknotens (Nᵣ), insbesondere einer Signalisierungs- oder Alarmfunktion.

8. Server-Cluster (12), der eine Vielzahl von Knoten (N_{i,j,k,l}) umfasst, die untereinander durch ein Netz von geographischen Zwischenverbindungen zwischenverbunden sind, welches eine Vielzahl von Übertragungssegmenten (10_{i+1/i}, 20_{i,j-1/j}, 30_{k-1/k}, 40ₖ) umfasst, die die Knoten untereinander gemäß einer vorbestimmten begrenzten Anzahl unterschiedlicher Verbindungsrichtungen verbinden, die jeweils mehreren unterschiedlichen Koordinaten eines Koordinatensystems des geographischen Zwischenverbindungsnetzes zugeordnet sind, wobei jedes Übertragungssegment des geographischen Zwischenverbindungsnetzes somit zu einer der unterschiedlichen Übertragungsrichtungen gehört, und das Koordinatensystem somit derart definiert ist, dass jede Koordinate des Koordinatensystems einer der unterschiedlichen Verbindungsrichtungen zugeordnet ist, wobei der Server-Cluster umfasst:
- Mittel zum Übertragen, mithilfe des geographischen Zwischenverbindungsnetzes, von Daten, die von einem Empfängerknoten genannten Knoten (Nₑ) gesendet werden und für mindestens einen anderen, Empfängerknoten genannten Knoten (Nᵣ) gedacht sind,
- Mittel (21, 31₁, ..., 31ₖ, ..., 31_{K}) zum Erzeugen einer Information, die sich auf die Übertragungssegmente des geographischen Zwischenverbindungsnetzes bezieht, welche zwischen diesem Senderknoten (Nₑ) und diesem Empfängerknoten (Nᵣ) bei ihrer Übertragung (106) durchlaufen werden, wobei diese Information mindestens einen Zähler umfasst, der inkrementiert oder dekrementiert wird, sobald ein entsprechendes Übertragungssegment von den Daten bei ihrer Übertragung durchlaufen wird, und
- Mittel zum Ausliefern dieser Information mit den übertragenen Daten an den mindestens einen Empfängerknoten (Nᵣ),
**dadurch gekennzeichnet, dass** die Mittel (21, 31₁, ..., 31ₖ, ..., 31_{K}) zum Erzeugen dieser Information genauer dafür konzipiert sind, dieselbe im Koordinatensystem des geographischen Zwischenverbindungsnetzes mithilfe von mehreren Zählern, einem Zähler pro Verbindungsrichtung, zu definieren, wobei jeder Zähler inkrementiert oder dekrementiert wird, sobald ein Übertragungssegment, das zwei Knoten in der diesem Zähler entsprechenden Verbindungsrichtung verbindet, von den Daten bei ihrer Übertragung vom Senderknoten zu dem mindestens einen Empfängerknoten durchlaufen wird.

9. Server-Cluster (12) nach Anspruch 8, wobei:
- die Knoten (N_{i,j,k,l}) weiter durch ein Administrationsnetz untereinander verbunden sind, das für die Übertragung von Dienstdaten gemäß dem IP-Protokoll eingerichtet ist, und jeder eine Netzschnittstelle mit vordefinierter MAC-Adresse umfasst,
- Adressierungsmittel (N_{1,1,1}, 21, 31₁, ..., 31ₖ, ..., 31_{K}) vorgesehen sind für das Zuweisen einer geographischen Adresse zu jedem Knoten des Server-Cluster auf der Basis der Information, die sich auf die Übertragungssegmente des geographischen Zwischenverbindungsnetzes beziehen, die zwischen einem als geographischer Ursprung gewählten Knoten und jedem Knoten durchlaufen werden, und
- Aufzeichnungsmittel vorgesehen sind für das Aufzeichnen und das Speichern der jedem Knoten zugewiesenen geographischen Adresse zusammen mit dessen MAC-Adresse.

10. Server-Cluster (12) nach Anspruch 8 oder 9, wobei:
- jeder Knoten (N_{i,j,k,l}) in einem Baugruppenträger (C_{i,j,k}) eingeschlossen ist, der seinerseits in einem IT-Rack (B_{i,j}) eingeschlossen ist, das seinerseits in einer Reihe (Ri) von IT-Racks eingeschlossen ist, wobei der Server-Cluster (12) eine Vielzahl von IT-Rack-Reihen (R1, ... Ri, ...RI) umfasst,
- das geographische Zwischenverbindungsnetz eine Vielzahl von Segmenten zur Zwischenverbindung der Reihen untereinander (10_{i-1/i} gemäß einer ersten Richtung, von Segmenten zur Zwischenverbindung von IT-Racks ein und derselben Reihe untereinander (20_{i,j-1/j}) gemäß einer zweiten Richtung, von Segmenten zur Zwischenverbindung von Baugruppenträgern ein und desselben IT-Racks untereinander (30_{k-1/k}) gemäß einer dritten Richtung, und von Segmenten zur Zwischenverbindung von Knoten ein und desselben Baugruppenträgers untereinander (40ₖ) gemäß einer vierten Richtung umfasst,
wobei der Server-Cluster (12) Mittel zum Austausch von Daten zwischen dem Senderknoten (Nₑ) und jedem Empfängerknoten (Nᵣ) umfasst, die dafür konzipiert sind, mit diesen Daten mindestens eine Information zu übertragen, die sich auf die Anzahl von Reihen-Zwischenverbindungssegmenten (10_{i-1/i}, die zwischen dem Senderknoten (Nₑ) und diesem Empfängerknoten (Nᵣ) durchlaufen wurden, auf die Anzahl von IT-Rack-Zwischenverbindungssegmenten (20_{i-1/i}), die zwischen dem Senderknoten (Nₑ) und diesem Empfängerknoten (Nᵣ) durchlaufen wurden, und auf die Baugruppenträger-Zwischenverbindungssegmente (30_{i-1/i}) bezieht, die zwischen dem Senderknoten (Nₑ) und diesem Empfängerknoten (Nᵣ) durchlaufen wurden.

11. Server-Cluster (12) nach Anspruch 10, wobei, da die Information, die sich auf die zwischen dem Senderknoten (Nₑ) und jedem Empfängerknoten (Nᵣ) durchlaufenen Übertragungssegmente (10_{i-1/i}, 20_{i,j-1/j}, 30_{k-1/k}, 40ₖ) bezieht, mindestens ein Feld zur Angabe der Anzahl von Reihen-Zwischenverbindungssegmenten (10_{i-1/i}), die zwischen dem Senderknoten (Nₑ) und diesem Empfängerknoten (Nᵣ) durchlaufen wurden, ein Feld zur Angabe der Anzahl von IT-Rack-Zwischenverbindungssegmenten (20_{i-1/i}, die zwischen dem Senderknoten (Nₑ) und diesem Empfängerknoten (Nᵣ) durchlaufen wurden, und ein Feld zur Angabe der Anzahl von Baugruppenträger-Zwischenverbindungssegmenten (30_{i-1/i}) umfasst, die zwischen dem Senderknoten (Nₑ) und diesem Empfängerknoten (Nᵣ) durchlaufen wurden, Inkrementierungs- oder Dekrementierungsmittel (21, 31₁, ..., 31ₖ, ..., 31_{K}) vorgesehen sind für das Inkrementieren oder das Dekrementieren jedes dieser Felder, sobald ein entsprechendes Segment von einer Nachricht durchlaufen wird, die zwischen dem Senderknoten (Nₑ) und diesem Empfängerknoten (Nᵣ) ausgetauschte Daten einschließt.

12. Server-Cluster (12) nach einem der Ansprüche 8 bis 11, umfassend:
- ein erstes allgemeines Administrationsnetz, das alle die Knoten (N_{i,j,k,l}) untereinander zwischenverbindet, und
- mindestens ein zweites Netz zur Verwaltung von Rechendaten, die dazu gedacht sind, zwischen den Knoten ausgetauscht zu werden, welches mindestens einen Teil der Knoten (N_{i,j,k,l}) untereinander verbindet,
wobei das geographische Zwischenverbindungsnetz ein zusätzliches Netz ist, das vom allgemeinen Administrationsnetz und dem Rechendaten-Verwaltungsnetz getrennt ist, insbesondere ein Netz, das das HDLC-Protokoll einsetzt.

## Claims

1. A method for the exchange of data between nodes of a server cluster (12) comprising a plurality of nodes (N_{i,j,k,l}) interconnected together by a geographic interconnection network comprising a plurality of transmission segments (10_{i-1/i}, 20_{i,j-1/j}, 30_{k-1/k}, 40ₖ) linking the nodes together according to a predetermined limited number of different connection directions respectively associated to several different coordinates of a system of coordinates of the geographic interconnection network, each transmission segment of the geographic interconnection network thus belonging to one of the different connection directions and the system of coordinates being thus defined so that each coordinate of the system of coordinates is associated to one of the different connection directions, the method comprising:
- sending (104) by a node (Nₑ), or send node, data intended for at least one other node (Nᵣ), or receive node,
- transmission (106) of this data using the geographic interconnection network,
- reception (108) of the data by each receive node (Nᵣ),
- supplying the data to each receive node (Nᵣ) with information relating to the transmission segments of the geographic interconnection network traversed between the send node (Nₑ) and this receive node (Nᵣ) on the transmission thereof,
**characterized in that** this information is more specifically defined in the system of coordinates of the geographic interconnection network using several counters, one counter per connection direction, each counter being incremented or decremented once a corresponding transmission segment that connects two nodes in the direction associated with this counter is traversed by the data on the transmission thereof from the send node to said at least one receive node.

2. The method for the exchange of data according to claim 1, wherein an increment or decrement counter value is associated with each transmission segment and defined according to the presence or not of at least one additional node of the server cluster (12) not connected to the geographic interconnection network but arranged geographically between the two nodes interconnected by this transmission segment.

3. The method for the exchange of data according to claim 1 or 2 for allocating a geographic address to each node, comprising:
- selection (300) of a geographic source (N_{1,1,1}) chosen from the nodes (N_{i,j,k,l}) of the server cluster (12),
- allocation (300) of a source address to this geographic source (N_{1,1,1}), and initialisation of each counter to at least one value defined on the basis of the source address allocated,
- transmission (302, 204) via the geographic source (N_{1,1,1}), to all the other nodes (N_{i,j,k,l}) of the server cluster (12), or receive nodes, of a message identified as requiring the allocation of a geographic address and including each counter, this transmission requiring incrementation or decrementation of each counter once the message passes through a corresponding transmission segment,
- allocation (302, 206), to each receive node (N_{i,j,k,l}), of a geographic address in the server cluster (12) defined on the basis of the value adopted by each counter when the message is received by this receive node,
- saving (302, 206) of the geographic address of each node (N_{i,j,k,l}) in address storage means of the server cluster.

4. The method for the exchange of data according to claim 3, wherein the geographic address allocated to any of the nodes (N_{i,j,k,l}) of the server cluster (12) is saved (302, 206) locally by this node in storage means comprised therein.

5. The method for the exchange of data according to claim 3 or 4 for verifying the integrity of the geographic interconnection network and the geographic addresses allocated, comprising:
- initialisation (300) of each counter to at least one value defined on the basis of the geographic address of an administer node (N_{1,1,1}) responsible for verifying said integrity,
- transmission (302, 204) via this administer node (N_{1,1,1}), to all the other nodes (N_{i,j,k,l}) of the server cluster (12), or receive nodes, of a message identified as requiring a verification of said integrity and including each counter, this transmission requiring incrementation or decrementation of each counter once the message passes through a corresponding transmission segment,
- return (302, 208) to the administer node (N_{1,1,1}), via at least a portion of the receive nodes (N_{i,j,k,l}), of validation or error messages in response to the request message,
- detection (302, 210) of a possible malfunction of the geographic interconnection network or a possible inconsistency in the allocation of the geographic addresses on the basis of the messages returned to the administer node (N_{1,1,1}).

6. The method for the exchange of data according to any of claims 3 to 5, wherein:
- on sending (104; 204), by the send node (Nₑ), data intended for the receive node (Nᵣ), each counter is initialised to at least one value defined on the basis of the geographic address of the send node (Nₑ),
- upon the transmission (106; 204) of this data using the geographic interconnection network, each counter is incremented or decremented once a corresponding transmission segment is traversed by a message comprising this data and the data is further transmitted with at least one value corresponding to the geographic address of the receive node (Nᵣ),
- the data is considered to have reached (108; 206) the receive node (Nᵣ) when the counter values are equal to the geographic address value of the receive node (Nᵣ) transmitted with the data.

7. The method for the exchange of data according to claim 6, wherein the data transmitted by the send node (Nₑ) to the receive node (Nᵣ) comprises one of the elements of the set consisting of:
- a request to allocate a geographic address to the receive node (Nᵣ), the send node (Nₑ) of this request being a geographic source (N_{1,1,1}) chosen from the nodes (N_{i,j,k,l}) of the server cluster (12),
- a request to verify the geographic address of the receive node (Nᵣ), the send node (Nₑ) of this request being a geographic source (N_{1,1,1}) chosen from the nodes (N_{i,j,k,l}) of the server cluster (12),
- a MAC address request, the send node (Nₑ) of this request being an administer node of the MAC addresses of all the nodes of the server cluster (12),
- a response to a MAC address request,
- a command to emulate a control panel command function of the receive node (Nᵣ), notably a restart, operation restore, initialisation or maintenance function, and
- a command to emulate a control panel command function of the receive node (Nᵣ), notably a reporting or alarm function.

8. A server cluster (12) comprising a plurality of nodes (N_{i,j,k,l}) interconnected together by a geographic interconnection network comprising a plurality of transmission segments (10_{i-1/i}, 20_{i,j-1/j}, 30_{k-1/k}, 40ₖ) linking the nodes together according to a predetermined limited number of different connection directions respectively associated to several different coordinates of a system of coordinates of the geographic interconnection network, each transmission segment of the geographic interconnection network thus belonging to one of the different connection directions and the system of coordinates being thus defined so that each coordinate of the system of coordinates is associated to one of the different connection directions, the server cluster comprising:
- transmission means, using the geographic interconnection network, of data sent by a node (Nₑ), or send node, and intended for at least one other node (Nᵣ), or receive node,
- means (21, 31₁, ..., 31ₖ, ..., 31_{K}) for generating information relating to the transmission segments of the geographic interconnection network traversed between this send node (Nₑ) and this receive node (Nᵣ) on the transmission (106) thereof, this information comprising at least one counter incremented or decremented once a corresponding transmission segment is traversed by the data on the transmission thereof, and
- means for supplying, to said at least one receive node (Nᵣ), this information with the transmitted data,
**characterized in that** means (21, 31₁, ..., 31ₖ, ..., 31_{K}) for generating this information are more specifically designed to define it in the system of coordinates of the geographic interconnection network using several counters, one counter per connection direction, each counter being incremented or decremented once a corresponding transmission segment that connects two nodes in the direction associated with this counter is traversed by the data on the transmission thereof from the send node to said at least one receive node.

9. The server cluster (12) according to claim 8, wherein:
- the nodes (N_{i,j,k,l}) are further interconnected together by an administration network suitable for service data transmission according to the IP protocol and each comprise a predefined MAC address network interface,
- addressing means (N_{1,1,1}, 21, 31₁, ..., 31ₖ, ..., 31_{K}) are provided for allocating a geographic address to each node of the server cluster on the basis of the information relating to the transmission segments of the geographic interconnection network traversed between a node chosen as the geographic source and each node, and
- saving means are provided for saving and storing the geographic address allocated to each node in association with the MAC address thereof.

10. The server cluster (12) according to claim 8 or 9, wherein:
- each node (N_{i,j,k,l}) is included in a chassis (C_{i,j,k}), in turn included in a computer rack (B_{i,j}), in turn included in a row (Ri) of computer racks, the server cluster (12) comprising a plurality of rows (R1, ... Ri, ... RI) of computer racks,
- the geographic interconnection network comprises a plurality of segments for interconnecting the rows together (10_{i-1/i}) according to a first direction, segments for interconnecting computer racks from the same row together (20_{i,j-1/j}) according to a second direction, segments for interconnecting chassis from the same computer rack together (30_{k-1/k}) according to a third direction and segments for interconnecting nodes from the same chassis together (40ₖ) according to a fourth direction,
the server cluster (12) comprising means for exchanging data between the send node (Nₑ) and each receive node (Nᵣ) designed to transmit, with this data, at least one item of information relating to the number of row interconnection segments (10_{i-1/i}) traversed between the send node (Nₑ) and this receive node (Nᵣ), the number of computer rack interconnection segments (20_{i-1/i}) traversed between the send node (Nₑ) and this receive node (Nᵣ) and the number of chassis interconnection segments (30_{i-1/i}) traversed between the send node (Nₑ) and this receive node (Nᵣ).

11. The server cluster (12) according to claim 10, wherein, the information relating to the transmission segments (10_{i-1/i}, 20_{i,j-1/j}, 30_{k-1/k}, 40ₖ) traversed between the send node (Nₑ) and each receive node (Nᵣ) comprising at least one field for indicating the number of row interconnection segments (10_{i-1/i}) traversed between the send node (Nₑ) and this receive node (Nᵣ), a field for indicating the number of computer rack interconnection segments (20_{i-1/i}) traversed between the send node (Nₑ) and this receive node (Nᵣ) and a field for indicating the number of chassis interconnection segments (30_{i-1/i}) traversed between the send node (Nₑ) and this receive node (Nᵣ), incrementing or decrementing means (21, 31₁, ..., 31ₖ, ..., 31_{K}) are provided for incrementing or decrementing each of these fields once a message including data exchanged between the send node (Nₑ) and this receive node (Nᵣ) passes through a corresponding segment.

12. The server cluster (12) according to any of claims 8 to 11, comprising:
- a first general administration network interconnecting all the nodes (N_{i,j,k,l}) together, and
- at least one second management network of compute data intended to be exchanged between the nodes, interconnecting at least a portion of the nodes (N_{i,j,k,l}) together,
wherein said geographic interconnection network is an additional network, separate from the general administration network and the compute data management network, notably a network using the HDLC protocol.
